(19) Europäisches Patentamt
European Patent Office
Office européen des brevets

(11) EP 1 529 066 B1

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(21) Anmeldenummer: **03793691.1**

(22) Anmeldetag: **05.08.2003**

(51) Int Cl.:
***C08F 2/44*** *(2006.01)* ***C08J 3/20*** *(2006.01)*
***C08K 5/103*** *(2006.01)*

(86) Internationale Anmeldenummer:
**PCT/EP2003/008667**

(87) Internationale Veröffentlichungsnummer:
**WO 2004/022606 (18.03.2004 Gazette 2004/12)**

(54) **HILFSMITTEL UND VERFAHREN ZUR VERARBEITUNG VON THERMOPLASTISCHEN ZUSAMMENSETZUNGEN**

AID AND METHOD FOR PROCESSING THERMOPLASTIC COMPOSITIONS

ADJUVANTS ET PROCEDE DE TRAITEMENT DE COMPOSITIONS THERMOPLASTIQUES

(84) Benannte Vertragsstaaten:
**AT BE BG CH CY CZ DE DK EE ES FI FR GB GR HU IE IT LI LU MC NL PT RO SE SI SK TR**

(30) Priorität: **15.08.2002 DE 10237319**

(43) Veröffentlichungstag der Anmeldung:
**11.05.2005 Patentblatt 2005/19**

(73) Patentinhaber: **Baerlocher GmbH**
**85716 Unterschleissheim (DE)**

(72) Erfinder:
- **HAUK, Jürgen**
  **85354 Freising (DE)**
- **FOKKEN, Stefan**
  **85244 Biberbach (DE)**
- **REITH, Walter**
  **82281 Egenhofen (DE)**
- **BRAUKMANN, Dirk**
  **85221 Dachau (DE)**

(74) Vertreter: **Fiesser, Gerold Michael et al**
**KNH Patentanwälte,**
**Kahlhöfer, Neumann, Herzog, Fiesser,**
**Isartorplatz 8**
**80331 München (DE)**

(56) Entgegenhaltungen:
**EP-A- 0 335 365**
**DE-A- 4 035 491**
**GB-A- 981 116**
**US-A- 5 185 404**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Verfahren zur Herstellung eines Verarbeitungshilfsmittels für Vinylpolymere, nach dem erfindungsgemäßen Verfahren hergestellte Verarbeitungshilfsmittel sowie Polymerzusammensetzungen enthaltend solche Verarbeitungshilfsmittel.

Weich-PVC hat bezüglich der Stabilisierung und der thermoplastischen Verarbeitung schon verhältnismäßig früh ein hohes Reifestadium erlangt und gilt seit den vierziger Jahren als ein leicht verarbeitbarer Kunststoff. Ermöglicht wurde dies durch den Einsatz von Weichmachern als Additiv bei der Verarbeitung des Weich-PVC.

Die Verarbeitung von hochmolekularem Hart-PVC, das häufig zur Herstellung von Kunststoffrohren, Verkleidungen, Behältern oder Profilen verwendet wird, war jedoch insbesondere wegen dessen thermischer Instabilität und dessen rheologischen Verhaltens mit technischen Problemen verbunden. Diese Probleme konnten jedoch durch den Zusatz von Hilfsmitteln teilweise gelöst werden. Daher besteht ein verarbeitungsbereites Hart-PVC in der Regel aus einem Gemisch von verschiedenen Komponenten.

Zu den bei der Verarbeitung von Hart-PVC zugesetzten Hilfsmitteln gehören z.B. Stabilisatoren, Gleitmittel und Verarbeitungshilfsmittel.

Die Stabilisatoren dienen beispielsweise dazu, der durch den Halogengehalt der PVC-Polymeren verursachten Schädigung der Metallteile der Verarbeitungsvorrichtung durch Korrosion und Rost sowie der Verfärbung und Zersetzung der PVC-Forrnteile durch Wärme oder UV-Strahlung entgegenzuwirken.

Die Hauptaufgabe von Gleitmitteln hingegen ist oft die Fließverbesserung der hochviskosen PVC-Schmelze bei deren Verformung und Plastifizierung in den verschiedenen Verarbeitungsvorrichtungen. Dabei unterscheidet man bei den Gleitmitteln zwischen "inneren" Gleitmitteln und "äußeren" Gleitmitteln. Die "äußeren" Gleitmittel liefern einen Gleitfilm zwischen der Kunststoffschmelze und den Metalloberflächen der Verarbeitungsvorrichtung. Dieser Gleitfilm vermindert die Haftung der einzelnen Polymerteilchen an den Metallflächen. Auf diese Weise kann einem Abbau des PVCs infolge der durch Reibung der Polymerteilchen an den Metalloberflächen resultierenden Erhöhung der Polymertemperaturen entgegen gewirkt werden. Die "inneren" Gleitmittel bauen die Reibung der Polymerteilchen aneinander in der Polymerschmelze ab und bewirken somit eine Verminderung der effektiven Viskosität der Polymerschmelze. Außerdem können durch den Einsatz derartiger "innerer" Gleitmittel Friktionswärmen als Folge der Reibung der Polymerteilchen aneinander vermindert werden, welche sich ebenfalls nachteilig auf die Eigenschaften des PVCs auswirken.

Üblicherweise werden als Gleitmittel Fettalkohole, Fettsäuren, Fettsäureamide, Fette, Esterwachse, Säurewachse, Paraffinöle, Paraffinwachse oder aber oxidierte oder nichtoxidierte Polyethylenwachse eingesetzt.

Die Hauptaufgabe der Verarbeitungshilfsmittel ist neben der Verkürzung des Plastifiziervorgangs vor allem eine Verbesserung der rheologischen Eigenschaften im thermoplastischen sowie im thermoelastischen Zustand. Die in der Regel hochmolekularen Verarbeitungshilfsmittel - im angelsächsischen auch "*processing aids*" genannt - werden auch als Fließhilfen bezeichnet.

Als Verarbeitungshilfsmittel werden üblicherweise Copolymerisate des Methacrylsäuremethylesters (MMA) mit anderen Methacryl- und Acrylsäurederivaten, insbesondere Estern, oder aber Polymere auf Basis von Acrylnitril, Styrol, $\alpha$-Methylstyrol oder Vinyltoluol eingesetzt.

So beschreibt DE 42 20 453 A1 eine thermoplastische Zusammensetzung, die als Verarbeitungshilfsmittel ein Copolymeres basierend auf einem Monomeren, welches als Homopolymerisat eine Glasübergangstemperatur ≥ 65°C aufweist, sowie auf einem Comonomeren mit einer $C_8$-$C_{22}$-Alkylkomponenente, beinhaltet.

DE 199 14 605 A1 beschreibt ein als Fließhilfsmittel bei der Herstellung eines Plastisols eingesetztes Copolymer bestehend zu 0 bis 90 Gew.-% aus Acrylsäureallcylestern mit mindestens 2 C-Atomen im Alkylrest und/oder Styrol, 10 bis 99 Gew.-% Methylacrylat, Methylmethacrylat oder Ethylacrylat, 1 bis 20 Gew.-% einer hydrophilen Verbindung in Form eines Acrylsäurederivates sowie 0,01 bis 1 Gew.-% eines Vernetzers.

DE 40 35 491 beschreibt ein Verarbeitungshilfsmittel in Form eines Alkylmethacrylat-Copolymeren mit einem Gewichtsmittel des Molekulargewichtes im Bereich von 2.000 bis < 20.000.

Die im zuvor genannten Stand der Technik beschriebenen, polymeren Verarbeitungshilfsmittel werden üblicherweise durch Lösungspolymerisation, Suspensionspolymerisation oder Emulsionspolymerisation erhalten. Bevor sie jedoch als Verarbeitungshilfsmittel den thermoplastischen Vinylpolymeren zugesetzt werden, ist eine zeit- und kostenaufwendige Trocknung der Polymeren erforderlich, die im Falle der Emulsionspolymerisation beispielsweise durch Sprühtrocknung erfolgt.

DE 21 23 384 beschreibt ein Verfahren zur Herstellung von nichtklebenden Vinylchloridhomo- oder -mischpolymerisaten, bei dem einer Vinylchloridmomomeren-Mischung oder einem Vinylchloridhomo- bzw.- mischpolymerisat als Additiv ein Gemisch aus einem polymeren Acrylester mit $C_4$-$C_8$-Alkoholen, einem Gleitmittel bzw. einer Gleitmittelmischung und/oder einem Anteil an Acrylnitril zugesetzt wird. Der polymere Acrylester wird dabei durch Polymerisation in dem geschmolzenen Gleitmittel oder aber durch Polymerisation in wässriger Emulsion erhalten. Die in DE 21 23 384 beschriebenen polymeren Acrylester werden in geschmolzener oder gelöster Form einer PVC-Suspension zugesetzt. Nachteilig bei den in diesem Dokument beschriebenen Polyacrylaten ist jedoch die teilweise Unverträglichkeit der Al-

kohole mit einer Kettenlänge ≥ $C_4$ mit thermoplastischem Hart-PVC. Darüber hinaus bewirken die beschriebenen Polymer/Gleitmittel-Gemische eine Verringerung der Reibung zwischen den Polymermolekülen bzw. zwischen Polymermolekülen und Verarbeitungsgeräten, die jedoch im Sinne der vorliegenden Erfindung nicht erwünscht ist.

Häufig ist es jedoch bei der Verarbeitung von halogenierten Polymeren notwendig bzw. wünschenswert, zur besseren Durchmischung und Plastifizierung der zu verarbeitenden Polymermasse, auch in Gegenwart eines inneren Gleitmittels eine Friktion zwischen den Polymermolekülen selbst bzw. zwischen Polymermasse und Wänden oder beweglichen Teilen des Verarbeitungsgeräts herbeizuführen.

Die DE 20 27 124 A1 betrifft ebenfalls ein Verfahren zur Herstellung von nicht klebenden Vinylchloridhomooder -mischpolymerisaten bzw. daraus verarbeitete Formkörper oder Formteile. Als Additive werden auch hier Gemische aus einem polymeren Acrylester mit $C_4$-$C_8$-Alkoholen im Alkoholrest, Gleitmittel bzw. eine Gleitmittelmischung und ein Anteil an Acrylnitril zugesetzt.

Die Aufgabe der vorliegenden Erfindung bestand daher darin, die sich aus dem Stand der Technik ergebenden Nachteile zu überwinden.

Insbesondere lag der vorliegenden Erfindung die Aufgabe zugrunde, ein Verfahren zur Verarbeitung thermoplastischer Zusammensetzungen auf Basis von Vinylpolymeren bereitzustellen, bei dem Verarbeitungshilfsmittel in Form von Polyacrylaten, welche eine zufriedenstellende Verträglichkeit insbesondere mit PVC aufweisen, ohne vorherige Trocknungsschritte der thermoplastischen Zusammensetzung eingesetzt werden können.

Der Erfindung lag weiterhin die Aufgabe zugrunde, ein Verarbeitungshilfsmittel bereitzustellen, welche neben einem schmelzbaren Additiv, beispielsweise einem Gleitmittel oder einem Weichmacher, eine Verarbeitungshilfe enthält, die in einfacher Weise, beispielsweise in Form von Partikeln, den Vinylpolymeren zugesetzt werden kann.

Gelöst werden die der Erfindung zu Grunde liegenden Aufgaben durch Verarbeitungshilfsmittel für Vinylpolymere, Verfahren zu deren Herstellung sowie Polymerzusammensetzungen, wie sie im Rahmen des nachfolgenden Textes beschrieben werden.

Gegenstand der vorliegenden Erfindung ist daher ein Verfahren zur Herstellung eines Verarbeitungshilfsmittels für Vinylpolymere, bei dem ein Reaktionsgemisch, mindestens enthaltend ein (Meth)acrylahnonomeres mit 1 bis 3 C-Atomen im Alkoholrest oder ein Monomerengemisch, mindestens enthaltend ein (Meth)acrylatmonomeres mit 1 bis 3 C-Atomen im Alkoholrest, und ein schmelzbares Additiv oder ein Gemisch aus zwei oder mehr schmelzbaren Additiven für Vinylpolymere, wobei das schmelzbare Additiv oder das Gemisch aus zwei oder mehr schmelzbaren Additiven unter Polymerisationsbedingungen in erweichtem, vorzugsweise in flüssigem Zustand vorliegt, insbesondere jedoch eine Erweichungstemperatur von mehr als 35 °C aufweist, bei einer Temperatur oberhalb der Erweichungstemperatur des Weichmachers oder des Gemischs aus zwei oder mehr Weichmachern radikalisch zu einem Reaktionsprodukt polymerisiert wird.

Der Begriff "(Meth)acrylsäureester" wird im Rahmen des vorliegenden Textes synonym sowohl für Ester der Methacrylsäure und der Acrylsäure verwendet, sofern nicht ausdrücklich etwas anderes angegeben wird.

Bei dem im Rahmen des vorliegenden Textes beschriebenen Verarbeitungshilfsmitteln für Vinylpolymere handelt es sich grundsätzlich um Verarbeitungshilfsmittel, die für im wesentlichen alle Arten von Vinylpolymeren einsetzbar sind.

Unter "Vinylpolymeren" werden dabei Polymere verstanden, die durch Polymerisation von Verbindungen mit mindestens einer olefinisch ungesättigten Doppelbindung erhältlich sind.

Vorzugsweise werden im Rahmen der vorliegenden Erfindung unter dem Begriff "Vinylpolymere" Polymere verstanden, die unter Beteiligung mindestens eines Monomeren erhalten wurden, das mindestens ein Halogenatom aufweist.

Beispielsweise handelt es sich bei "Vinylpolymeren" im Sinne der vorliegenden Erfindung um Polymere ausgewählt aus der Gruppe bestehend aus Polyvinylchlorid, Polymere aus Vinylacetat, Vinylacetat-Vinylchlorid-Copolymere, Polymere aus Vinylidenhalogeniden, wie z. B. Vinylidenchlorid, Vinylpyridin, Vinylcarbazol, Styrol, Vinylbenzol, Polymere aus Acrylsäureestern, wie Methylacrylat, Ethylacrylat, oder Methylmethacrylat, oder Polymere aus Acrylnitril. Besonders bevorzugte Vinylpolymere sind Homopolymere des Vinylchlorids sowie Copolymere und Terpolymere des Vinylchlorids mit weiteren Comonomeren, wie z. B. Vinylacetat, Vinylformiat, Alkylvinylethern, Ethylen, Propylen, Butylen, Vinylidenchlorid, Alkylacrylaten, Alkylmethacrylaten, Maleinsäurealkylestern und Fumarsäurealkylestern. Es ist weiterhin bevorzugt, dass ein Vinylpolymeres zu mindestens 50 Gew.-%, besonders bevorzugt zu mindestens 75 Gew.-% und darüber hinaus bevorzugt zu mehr als 90 Gew.-%, vorzugsweise im wesentlichen zu 100 Gew.-%, jeweils bezogen auf das Gewicht des Vinylpolymeren, auf Vinylchlorid-Monomeren basiert. Der Begriff "Vinylpolymere schließt im Rahmen der vorliegenden Erfindung auch physikalische Gemische aus zwei oder mehr unterschiedlichen Vinylpolymeren, sogenannten Blends, ein.

Zur Herstellung eines erfindungsgemäßen Verarbeitungshilfsmittel für Vinylpolymere wird ein Reaktionsgemisch, mindestens enthaltend ein (Meth)acrylatmonomeres mit 1 bis 3 C-Atomen im Alkoholrest oder ein Monomerengemisch, mindestens enthaltend ein (Meth)acrylatmonomeres mit 1 bis 3 C-Atomen im Alkoholrest, und ein schmelzbares Additiv oder ein Gemisch aus zwei oder mehr schmelzbaren Additiven für Vinylpolymere zu einem Reaktionsprodukt

polymerisiert, wobei das schmelzbare Additiv oder das Gemisch aus zwei oder mehr schmelzbaren Additiven unter Polymerisationsbedingungen in erweichtem, vorzugsweise in flüssigem Zustand vorliegt.

Im Rahmen einer bevorzugten Ausführnmgsform der vorliegenden Erfindung weist das schmelzbare Additiv oder das Gemisch aus zwei oder mehr schmelzbaren Additiven eine Erweichungstemperatur von mehr als 35°C auf. Die Polymerisation erfolgt dabei vorzugsweise bei einer Temperatur oberhalb der Erweichungstemperatur des schmelzbaren Additivs oder des Gemischs aus zwei oder mehr schmelzbaren Additiven, beispielsweise bei einer Temperatur von mindestens 80 °C.

Unter einem "schmelzbaren Additiv" wird im Rahmen der vorliegenden Erfindung grundsätzlich jedes Additiv verstanden, das im Gemisch mit Vinylpolymeren eine Eigenschaftsveränderung dieser Vinylpolymeren bewirkt. Beispielsweise handelt es sich bei entsprechenden "schmelzbaren Additiven" um Weichmacher oder Gleitmittel. Weitere geeignete "schmelzbare Additive" werden im Rahmen des vorliegenden Textes beispielsweise im Rahmen der Aufzählung geeigneter Zusatzstoffe genannt. Insbesondere handelt es sich bei derartigen schmelzbaren Additiven um Verbindungen, welche die Verarbeitbarkeit oder die Stabilität entsprechend behandelter Vinylpolymerer positiv beeinflusst.

Ein erfindungsgemäßes Reaktionsgemisch enthält dabei mindestens zwei in ihrer Funktionalität unterschiedliche Komponenten. Eine erste Komponente, die aus einem oder mehreren unterschiedlichen Bestandteilen bestehen kann, enthält Verbindungen, die mindestens eine olefinisch ungesättigte, radikalische polymerisierbare Doppelbindung aufweisen. Diese Komponente wird im Rahmen des vorliegenden Textes auch als "Monomerkomponente" bezeichnet.

Als mindestens eine weitere Komponente enthält einen im Rahmen eines erfindungsgemäßen Verfahrens eingesetztes Reaktionsgemisch noch mindestens ein schmelzbares Additiv oder ein Gemisch aus zwei oder mehr schmelzbaren Additiven, deren Schmelze als Lösemittel im Rahmen der Polymerisation der Monomerkomponente dient.

Zur Herstellung eines erfindungsgemäßen Verarbeitungshilfsmittels sind dabei grundsätzlich diejenigen Reaktionsgemische geeignet, die als Bestandteil der Monomerkomponente mindestens ein Monomeres ausgewählt aus der Gruppe bestehend aus Methylacrylat, Ethylacrylat, Propylacrylat, Methylmethacrylat, Ethylmethacrylat oder Propylmethacrylat enthalten. Erfindungsgemäß sind jedoch auch solche Reaktionsgemische geeignet, die ein Gemisch aus zwei oder mehr der oben genannten Monomeren enthalten.

Der Anteil der Verbindungen aus der Gruppe der (Meth)acrylatester mit 1 bis 3 C-Atomen im Alkoholrest an der Monomerkomponente beträgt im Rahmen der vorliegenden Erfindung etwa 0,1 bis etwa 100 Gew.-%, beispielsweise etwa 1 bis etwa 99 Gew.-% oder etwa 5 bis etwa 98 Gew.-%. Im Rahmen einer bevorzugten Ausführungsform der vorliegenden Erfindung beträgt der Anteil der Verbindungen aus der Gruppe der (Meth)acrylatester mit 1 bis 3 C-Atomen im Alkoholrest an der Monomerkomponente mehr als etwa 30, insbesondere mehr als etwa 40 oder mehr als etwa 60 Gew.-%.

Neben einer Verbindung oder einem Gemisch aus zwei oder mehr Verbindungen aus der Gruppe der (Meth) acrylatester mit 1 bis 3 C-Atomen im Alkoholrest kann eine Monomerkomponente im Rahmen des erfindungsgemäßen Verfahrens noch ein weiteres Monomeres oder ein Gemisch aus zwei oder mehr weiteren Monomeren enthalten.

Geeignete weitere Monomere weisen dabei grundsätzlich ebenfalls eine radikalisch polymerisierbare, olefinisch ungesättigte Doppelbindung auf und können vorzugsweise mit Verbindungen aus der Gruppe der (Meth)acrylatester mit 1 bis 3 C-Atomen im Alkoholrest an der Monomerkomponente entweder alternierend, statistisch oder blockweise copolymerisiert werden.

Grundsätzlich sind als weitere Monomere beispielsweise die Ester der Acrylsäure, Methacrylsäure, Ethacrylsäure, α-Chloracrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, β-Stearylsäure, Itaconsäure, Citraconsäure, Mesacronsäure, Glutaconsäure, Aconitsäure, Maleinsäure, Fumarsäure, des Tricarboxyethylens und des Maleinsäureanhydrids, wobei der Alkoholrest des Esters 1 bis 24 C-Atome aufweisen kann. Dabei sind natürlich die bereits zwingend in der Monomerkomponente vorliegenden Verbindungen aus der Gruppe der (Meth) acrylatester mit 1 bis 3 C-Atomen im Alkoholrest ausgenommen. Weiterhin als weitere Monomere geeignet sind beispielsweise Styrol und Styrolderivate, Vinylacetat und dergleichen.

Im Rahmen einer bevorzugten Ausführungsform der vorliegenden Erfindung enthält die im Rahmen des erfindungsgemäßen Verfahrens eingesetzte Monomerkomponente Ester der Acrylsäure oder Ester der Methacrylsäure mit 4 oder mehr C-Atomen, beispielsweise 4 bis etwa 12 C-Atomen, im Alkoholrest. Es ist erfindungsgemäß besonders bevorzugt, wenn die Monomerkomponente einen Anteil an Butylacrylat oder Butylmethacrylat oder Pentylacrylat oder Pentylmethacrylat oder Hexylacrylat oder Hexylmethacrylat oder Heptylacrylat oder Heptylmethacrylat oder Octylacrylat oder Octylmethacrylat oder ein Gemisch aus zwei oder mehr der genannten Verbindungen enthält. Die Alkylreste im Alkoholrest können dabei als lineare oder verzweigte Reste vorliegen.

Im Rahmen einer weiteren Ausführungsform der vorliegenden Erfindung enthält die Monomerkomponente eine solche Menge an Methylmethacrylat, dass das entstehende Polymer zu mindestens 50 Gew.-%, bevorzugt zu mindestens 75 Gew.-%, besonders bevorzugt zu mindestens 90 Gew.-% und darüber hinaus bevorzugt zu 100 Gew.-%, bezogen auf das Gewicht des entstehenden Polymers, auf (Meth)acrylsäuremethylester basiert. In einer weiteren Ausfihrungsform des erfindungsgemäßen Verfahrens wird als Monomerkomponente ein Gemisch aus Methacrylsäuremethylester und

(Meth)acrylsäure-n-butylester in einem Gewichtsverhältnis Methacrylsäuremethylester : (Meth)acrylsäure-n-butylester in einem Bereich von 10 : 1 bis 1 : 5, beispielsweise in einem Bereich von 5 : 1 bis 2 : 1 eingesetzt.

Vorzugsweise enthält also ein Monomerengemisch wie es im Rahmen der vorliegenden Erfindung eingesetzt wird mindestens 50 Gew.-% Methyl(meth)acrylat.

Neben der Monomerkomponente enthält ein im Rahmen eines erfindungsgemäßen Verfahrens eingesetztes Reaktionsgemisch noch eine weitere Komponente, nämlich ein schmelzbares Additiv oder ein Gemisch aus zwei oder mehr schmelzbaren Additiven, die im geschmolzenen Zustand als Lösemittel für die Polymerisation dient. Diese im Rahmen des vorliegenden Texts auch als "Lösemittelkomponente" bezeichnete Komponente liegt bei den im Rahmen der vorliegenden Erfindung herrschenden Polymerisationsbedingungen in einem Aggregatzustand vor, der eine Polymerisation der radikalisch polymerisierbaren Monomeren ermöglicht. Die Lösemittelkomponente liegt daher bei den im Rahmen der Polymerisation herrschenden Bedingungen zumindest in erweichtem Zustand, vorzugsweise jedoch in flüssigem Zustand vor. Es kann sich also bei einem Lösemittelgemisch entsprechend der vorliegenden Erfindung um ein schmelzbares Additiv oder ein Gemisch aus zwei oder mehr schmelzbaren Additiven handeln, die bei Raumtemperatur (23 °C) in erweichtem oder flüssigem Zustand vorliegen.

Im Rahmen einer bevorzugten Ausführungsform der vorliegenden Erfindung weist die Lösemittelkomponente jedoch einen Schmelzpunkt von mindestens etwa 25°C, vorzugsweise jedoch mindestens etwa 30 °C, bis etwa 150 °C, beispielsweise etwa 40 bis etwa 110°C auf. Wenn die im Rahmen des erfindungsgemäßen Verfahrens eingesetzte Lösemittelkomponente keinen scharfen Schmelzpunkt zeigt, so gelten die oben genannten Temperaturen für einen entsprechenden Erweichungspunkt.

Es ist dabei möglich, dass die Lösemittelkomponente nur eine Verbindung enthält, es ist jedoch ebenso vorgesehen, dass die Lösemittelkomponente im Rahmen der vorliegenden Erfindung zwei oder mehr Verbindungen als Bestandteile enthält. Wenn die Lösemittelkomponente zwei oder mehr Verbindungen enthält, so ist es nicht erforderlich, dass alle in der Lösemittelkomponente enthaltenen Verbindungen einen Schmelzpunkt aufweisen, der innerhalb des oben genannten Intervalls liegt. Es ist ausreichend, dass die Lösemittelkomponente insgesamt einen Schmelzpunkt oder einen Erweichungspunkt innerhalb des obengenannten Intervalls aufweist.

Grundsätzlich eignen sich im Rahmen der vorliegenden Erfindung als Lösemittelkomponente oder als Bestandteil der Lösemittelkomponente alle Verbindungen, die dazu führen, dass die Lösemittelkomponente einen geeigneten Schmelzbereich aufweist und die darüber hinaus gegenüber den Bedingungen wie sie bei einer radikalischen Polymerisation herrschen, im Wesentlichen inert sind, d. h., die den Ablauf der Polymerisation nicht vollständig unterbinden oder nicht oder nur unwesentlich beeinflussen.

Dies hat sich dabei im Rahmen der vorliegenden Erfindung herausgestellt, dass als Lösemittelkomponente oder zumindest als Bestandteil der Lösemittelkomponente besonders solche Verbindungen geeignet sind, wie sie bei der Verarbeitung von halogenierten Polymeren üblicherweise als "Gleitmittel" und "Weichmacher" eingesetzt werden.

Geeignete Gleitmittel sind beispielsweise Paraffinwachse, Polyethylenwachse, Polypropylenwachse, Montanwachse, Estergleitmittel wie Fettsäureester, gereinigte oder hydrierte natürliche oder synthetische Triglyzeride oder Partialester, Amidwachse, Chlorparaffine, Glyzerinester oder Erdalkaliseifen. Verwendbare Gleitmittel werden darüber hinaus auch in "Kunststoffadditive", R. Gächter/H. Müller, Carl Hanser Verlag, 3. Auflage, 1989, S. 478 - 488 beschrieben. Weiterhin als Gleitmittel geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet. Besonders geeignet sind im Rahmen der vorliegenden Erfindung Gleitmittel der Produktreihe Baerolub® der Firma Baerlocher GmbH (Unterschleißheim, Deutschland).

Unter den Begriff "Gleitmittel fallen dabei auch solche Verbindungen, die im Hinblick auf die Eigenschaften einer Vinylpolymere enthaltenden Zusammensetzung neben einer die Gleiteigenschaften verbessernden Eigenschaft noch eine weitere oder zwei oder mehr weitere eigenschaftsverändemde Funktionen aufweisen.

Eine erfindungsgemäß einsetzbare Lösemittelkomponente kann die beschriebenen Gleitmittel in einer Menge von bis zu etwa 100 Gew.-%, insbesondere bis etwa 80 Gew.-%, bezogen auf die gesamte Lösemittelkomponente, enthalten.

Als Weichmacher zum Einsatz in einer erfindungsgemäß einsetzbaren Lösemittelkomponente geeignet sind beispielsweise Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Dimethylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-isotridecyl- und Benzylbutylphthalat sowie die genannten Mischungen von Alkylphthalaten. Ebenfalls geeignet sind beispielsweise die ganz oder teilweise kernhydrierten Derivate der oben genannten Verbindungen, beispielsweise kernhydriertes Dioctylphthalat, sofern sie

nicht an der radikalischen Polymerisation teilnehmen können oder diese nicht oder nicht wesentlich auf sonstige Weise nachteilig beeinflussen.

Weiterhin als Weichmacher zum Einsatz in einer erfindungsgemäß einsetzbaren Lösemittelkomponente geeignet sind die Ester aliphatischer Dicarbonsäuren, insbesondere die Ester von Adipin-, Azelain- oder Sebacinsäure oder Gemische aus zwei oder mehr davon. Beispiele für derartige Weichmacher sind Di-2-ethylhexyladipat, Di-isooctyladipat, Di-iso-nonyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Weichmacher geeignet sind Trimellithsäureester wie Tri-2-ethylhexyltrimellithat,Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Weichmacher sind beispielsweise Polymerweichmacher, wie sie in "Kunststoffadditive", R. Gächter/H. Müller, Carl Hanser Verlag, 3. Auflage, 1989, Kapitel 5.9.6, Seiten 412-415, oder "PVC Technology", W. V. Titow, 4th Edition, Elsevier Publishers, 1984, Seiten 165-170, angegeben sind. Die gebräuchlichsten Ausgangsmaterialien für die Herstellung von Polyesterweichmacher sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethylhexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Bevorzugte Gleitmittel sind dabei Fettalkohole, Fettsäuren, Fettsäureester, Fettsäureamide, wie Ethylenbisstearinsäureamid, natürliche Öle und Fette, Esterwachse, wie Montansäureesterwachse, Mineralöl, Paraffinöle, Paraffinwachse, oxidierte oder nichtoxidierte Polyethylene, insbesondere Polyethylenwachse sowie Mischungen aus zwei oder mehr davon.

Als Fettalkohole besonders bevorzugt sind Laurylalkohol, Dodecan-1-ol, isoTridecanol, Myristylalkohol, Cetylalkohol, Palmitylalkohol, Stearylalkohol, Oleylalkohol, Lauryl-Myristylalkohol, Cetyl-Stearylalkohol oder Mischungen aus mindestens zwei davon.

Als Fettsäuren werden beispielsweise Palmitinsäure, Stearinsäure, Arachinsäure, Behensäure, Lignocerinsäure, Pahnitinsäure, Ölsäure, Elaidinsäure, cis-Vaccensäure, Linolsäure, $\alpha$-Linolensäure, $\gamma$-Linolensäure, Di-homo-$\gamma$-Linolensäure, Arachidonsäure, Erucasäure, Nervonsäure oder Mischungen aus mindestens zwei davon eingesetzt.

Bevorzugte Fettsäureester sind die Glycerinester, insbesondere die Triglyceride, sowie die Glykolester der vorstehend genannten Fettsäuren, insbesondere die Glyzerinester der gesättigten Fettsäuren mit mehr als etwa 14 C-Atomen.

Von den natürlichen Ölen oder Fetten pflanzlicher oder tierischer Herkunft werden vorzugsweise Butterfett, Schmalz, Rindertalg, Hammeltalg, Gänseschmalz, Knochenöl, vorzugsweise bovines Knochenöl, Klauenfett, Heringsöl, Sardinenöl, Spermöl, Dorschleberöl, Fischöl, Babussufett, Olivenkernöl, Rapsöl, Senföl, Baumwollsaatöl, Sojaöl, Leinsaatöl, Sonnenblumenöl, Kokosfett, Palmkemfett, Palmöl, Avocadoöl, Erdnussöl, Sesamöl, Safloröl, Maiskeimöl, Traubenöl, Walnussöl, Kakaobutter, Rizinusöl, Tungöl oder Mischungen aus mindestens zwei davon als Bestandteile der erfindungsgemäß eingesetzten Lösemittelkomponente eingesetzt.

Ebenfalls als Bestandteil der erfindungsgemäß eingesetzten Lösemittelkomponente geeignet sind langkettige Kohlenwasserstoffe sowie Wachse und deren Derivate.

Besonders geeignet sind dabei beispielsweise Polyethylenwachse und deren Derivate, beispielsweise oxidiertes Polyethylen.

Im Rahmen einer weiteren bevorzugten Ausführungsform der vorliegenden Erfindung enthält das Reaktionsgemisch beim erfindungsgemäßen Verfahren ein Triglyzerid und mindestens einen weiteren Weichmacher für Vinylpolymere.

Bevorzugte oxidierte oder nichtoxidierte Polyethylene lassen sich als oxidierte oder nichtoxidierte Ethylen-Homopolymere hoher Dichte, als Acrylate und Ethy-len enthaltende Copolymere oder als Acrylate, Ester und Ethylen enthaltende Ter-polymere charakterisieren. Besonders bevorzugt sind oxidierte oder nichtoxidierte Ethylenhomopolymere hoher Dichte. Im Falle der oxidierten Polyethylene wurden diese zu einer durch Standardtitration mit KOH bestimmten Säurezahl in einem Bereich von 5 bis 40, besonders bevorzugt in einem Bereich von 10 bis 30, oxi-diert. Vorzugsweise weisen die Polyethylene eine Dichte gemäß ASTM D-1505 von 0,85 bis 1,05, besonders bevorzugt von 0,98 bis 1,05 auf. Die Polyethylene haben vorzugsweise eine Brookfield-Viskosität bei einer Temperatur von 150°C in einem Bereich von 100 bis 100.000 Centipoise, besonders bevorzugt in einem Bereich von 1.000 bis 85.000 Centipoise.

Im Rahmen des erfindungsgemäßen Verfahrens erfolgt die Zugabe des Monome-ren oder des Monomerengemischs aus zwei oder mehr Monomeren vorzugsweise sukzessiv in einem Volumenverhältnis von 1:500 bis 1:50, bezogen auf das Volumen des schmelzbaren Additivs oder des Gemischs aus zwei oder mehr schmelzbaren Additiven, pro Minute während der Reaktionsdauer.

Im Rahmen einer Volumenzugabe an Monomerem oder Monomerengemisch "pro Minute während der Reaktionsdauer" bezogen auf das Volumen des schmelzbaren Additivs oder des Gemischs aus zwei oder mehr schmelzbaren Additiven sollen pro Minute höchstens 2 Volumenprozent (bezogen auf das Volumen des Additivs) und mindestens 0,2 Volumenprozent (bezogen auf das Volumen des Additivs) an Monomerem oder Monomerengemisch zugegeben werden.

Liegen also beispielsweise 100 ml eines schmelzbaren Additivs vor, so sollen vorzugsweise maximal 2 ml pro Minute und mindestens 0,2 ml pro Minute an Monomeren oder Monomerengemisch (bezogen auf das Volumen des Additivs) zugegeben werden.

Vorzugsweise weist das im Rahmen des erfindungsgemäßen Verfahrens eingesetzte Reaktionsgemisch ein Gewichtsverhältnis Monomerkomponente : Lösemittelkomponente in einem Bereich von etwa 1 : 10 bis etwa 10 : 1, besonders bevorzugt in einem Bereich von etwa 1 : 5 bis etwa 5 : 1 und darüber hinaus bevorzugt in einem Bereich von etwa 1 : 2 bis etwa 2 : 1, beispielsweise etwa 1,5 : 1 bis etwa 1 : 1,5 auf.

Im Rahmen einer weiteren Ausführungsform des erfindungsgemäßen Verfahrens enthält die Lösemittelkomponente mindestens zwei, vorzugsweise jedoch drei oder mehr Bestandteile. Besonders bevorzugt ist es, wenn die Lösemittelkomponente mindestens ein Triglycerid, vorzugsweise mindestens ein gesättigtes Triglycerid enthält. Im Rahmen einer weiteren bevorzugten Ausfiffinmgsform enthält eine im Rahmen eines erfindungsgemäßen Verfahrens eingesetzte Lösemittelkomponente mindestens ein oxidiertes Polyethylenwachs oder mindestens ein Polyethylenwachs, vorzugsweise jedoch beides.

Im Rahmen einer weiteren Ausführungsform der vorliegenden Erfindung enthält eine erfindungsgemäß eingesetzte Lösemittelkomponente etwa 30 bis etwa 70 Gew.-% eines Triglycerids und etwa 30 bis etwa 70 Gew.-% eines Polyethylenwachses oder eines Gemischs aus zwei oder mehr Polyethylenwachsen.

Im Rahmen einer weiteren Ausführungsform der vorliegenden Erfindung wird als Lösemittelkomponente beispielsweise eine Mischung aus einem Triglycerid, insbesondere Rindertalg, einem nichtoxidierten Polyethylenwachs und einem oxidierten Polyethylenwachs eingesetzt.

Zur Herstellung eines Verarbeitungshilfsmittels nach einem erfindungsgemäßen Verfahren wird ein Reaktionsgemisch, das mindestens die oben beschriebene Lösemittelkomponente und die oben beschriebene Monomerkomponente enthält, einer Polymerisation unterzogen. Dabei polymerisiert die Monomerkomponente, so dass sich als Reaktionsprodukt ein Gemisch aus Lösemittelkomponente und einem oder mehreren Polymeren, wie sie durch die Polymerisation der Monomerkomponente erhältlich sind, ergibt.

Das erfindungsgemäße Verfahren kann grundsätzlich in jeder beliebigen Weise durchgeführt werden, solange sich als Reaktionsprodukt das gewünschte Gemisch aus einem oder mehreren Polymeren und einer Lösemittelkomponente, wie sie im Rahmen des vorliegenden Textes beschrieben wird, ergibt.

Beispielsweise kann im Rahmen des erfindungsgemäßen Verfahrens dem Reaktionsgemisch vor oder während der Polymerisation oder dem Reaktionsprodukt ein Stabilisator für Vinylpolymere zugesetzt werden.

Vorzugsweise liegt das schmelzbare Additiv oder das Gemisch aus zwei oder mehr schmelzbaren Additiven unter Polymerisationsbedingungen in flüssigem Zustand vor.

Eine Möglichkeit zur Durchführung des erfindungsgemäßen Verfahrens besteht beispielsweise darin, in einem ersten Schritt die Lösemittelkomponente auf eine Temperatur oberhalb des Schmelzpunktes oder des Erweichungspunkts der Lösemittelkomponente, vorzugsweise unter einer Inertgasatmosphäre, besonders bevorzugt unter Stickstoffatmosphäre, zu schmelzen. Anschließend werden der geschmolzenen Lösemittelkomponente in einem zweiten Schritt die Monomerkomponente sowie ein oder mehrere Polymerisationsinitiatoren zugesetzt, wodurch die Polymerisation der Monomerkomponente erfolgt.

Vorzugsweise weist das schmelzbare Additiv oder das Gemisch aus zwei oder mehr schmelzbaren Additiven einen Schmelzpunkt von mindestens 30 °C auf.

Es ist dabei im Rahmen der vorliegenden Erfindung möglich, zunächst Lösemittelkomponente und Monomerkomponente zu vermischen und anschließend den Polymerisationsinitiator oder das Gemisch aus zwei oder mehr Polymerisationsinitiatoren zuzugeben. Es ist jedoch ebenso möglich, zunächst die Lösemittelkomponente und den Polymerisationsinitiator oder das Gemisch aus zwei oder mehr Polymerisationsinitiatoren zu vermischen und anschließend die Monomerkomponente zuzugeben.

Die Zugabe der Monomerkomponente kann im Rahmen des erfindungsgemäßen Verfahrens grundsätzlich auf beliebige Weise erfolgen. So kann beispielsweise die gesamte Monomerkomponente dem Reaktionsgemisch in einer kurzen Zeitspanne zugeführt werden. Es ist jedoch im Rahmen der vorliegenden Erfindung bevorzugt, wenn die Monomerkomponente dem Reaktionsgemisch über einen längeren Zeitraum, beispielsweise über einen Zeitraum von etwa 1 min bis etwa 5 h, insbesondere über einen Zeitraum von etwa 2 min bis etwa 60 min stoßweise oder vorzugsweise kontinuierlich, beispielsweise mit statischer Zugabemenge oder mit einer sich im Rahmen eines Gradienten verändernden Zugabemenge, zugeführt wird.

Im Rahmen einer bevorzugten Ausführungsform der vorliegenden Erfindung wird zunächst eine Schmelze der Lösemittelkomponente hergestellten und anschließend kontinuierlich über einen längeren Zeitraum, beispielsweise über einen Zeitraum von etwa 5 bis etwa 30 Minuten, die Monomerkomponente zusammen mit dem Polymerisationsinitiator zugetropft. Dabei hat es sich als vorteilhaft erwiesen, den Polymerisationsinitiator in der Monomerkomponente zu lösen oder zu dispergieren. Dadurch ist gewährleistet, dass dem Reaktionsgemisch eine ständig gleich bleibende Konzentration an Monomerkomponente und Polymerisationsinitiator zugeführt wird.

Als Initiatoren zur Initiierung der Polymerisation können alle unter den Polymerisationsbedingungen Radikale bildende Initiatoren verwendet werden. Auch eine Initiierung der Polymerisation durch Einwirkung von Elektronenstrahlen auf die polymerisierbare Mischung ist möglich. Die Polymerisation kann allerdings auch in Abwesenheit von Initiatoren der obengenannten Art durch Einwirkung energiereicher Strahlung in Gegenwart von Photoinitiatoren ausgelöst werden. Als Initiatoren kommen sämtliche dem Fachmann bekannte in Radikale zerfallende Verbindungen in Betracht. Hierunter fallen insbesondere Peroxide, Hydroperoxide, Wasserstoffperoxid, Persulfate, Azoverbindungen sowie die sogenannten Redoxkatalysatoren. In manchen Fällen ist es vorteilhaft, Mischungen verschiedener Polymerisationsinitiatoren zu verwenden. Unter diesen Mischungen sind die aus Wasserstoffperoxid und Natrium- oder Kaliumperoxodisulfat bevorzugt, die in jedem denkbaren Mengenverhältnis eingesetzt werden können. Geeignete organische Peroxide sind vorzugsweise Acetylacetonperoxid, Methylethylketonperoxid, t-Butylhydroperoxid, Cumolhydroperoxid, t-Amylperpivalat, t-Butylperpivalat, t-Butylperneohexonat, t-Butylisobutyrat, t-Butylper-2-ethylhexenoat, t-Butylperisononanoat, t-Butylpermaleat, Cumolhydroperoxid, t-Amylperpivalat, t-Butylperpivalat, t-Butylperneohexonat, t-Butylisobutyrat, t-Butylper-2-ethylhexenoat, t-Butylperisononanoat, t-Butylpermaleat, t-Butylperbenzoat, t-Butyl-3,5,5-tri-methylhexanoat und Amylperneodekanoat, und Amylperneodekanoat. Weiterhin sind als Polymerisationsinitiatoren bevorzugt: Azoverbindungen, wie 2,2'-Azobis-(2-amidinopropan)dihydrochlorid, Azo-bis-amidinopropandihydrochlord, 2,2'-Azobis-(N,N-dimethylen)isobutyramidin-dihydrochlorid, 2-(Carbamoylazo)isobutyronitril und 4,4'-Azobis-(4-cyanovaleriansäure). Die genannten Verbindungen werden in üblichen Mengen eingesetzt, vorzugsweise in einem Bereich von 0,01 bis 5, bevorzugt von 0,1 bis 2 Mol-%, jeweils bezogen auf die Menge der zu polymerisierenden Monomere.

Die Redoxkatalysatoren enthalten als oxidische Komponente mindestens eine der oben angegebenen Perverbindungen und als reduzierende Komponente vorzugsweise Ascorbinsäue, Glukose, Sorbose, Mannose, Ammonium- oder Alkalimetallhydrogensulfit, -sulfat, -thiosulfat, -hyposulfit oder -sulfid, Metallsalze, wie Eisen-II-ionen oder Silberionen oder Natriumhydroxymethylsulfoxylat. Vorzugsweise wird als reduzierende Komponente des Redoxkatalysators Ascorbinsäure oder Natriumpyrosulfit verwendet. Bezogen auf die bei der Polymerisation eingesetzte Menge an Monomeren wird $1\times10^{-5}$ bis 1 Mol-% der reduzierenden Komponente des Redoxkatalysators und $1\times10^{-5}$ bis 5 Mol-% der oxidierenden Komponente des Redoxkatalysators eingesetzt. Anstelle der oxidierenden Komponente des Redoxkatalysators, oder in Ergänzung zu diesem, können ein oder mehrere Azoverbindungen verwendet werden.

Wenn man die Polymerisation durch Einwirkung energiereicher Strahlung auslöst, verwendet man üblicherweise als Initiator sogenannte Photoinitiatoren. Hierbei kann es sich beispielsweise um sogenannte $\alpha$ -Spalter, H-abstrahierende Systeme oder auch um Azide handeln. Beispiele für solche Initiatoren sind Benzophenon-Derivate wie Michlers-Keton, Phenanthren-Derivate, Fluoren-Derivate, Anthrachinon-Derivate, Thioxanton-Derivate, Cumarin-Derivate, Benzoinether und deren Derivate, Azoverbindungen wie die oben genannten Radikalbildner, substituierte Hexaarylbisimidazole oder Acylphosphinoxide. Beispiele für Azide sind: 2-(N,N-Dimethylamino)-ethyl-4-azidocinnamat, 2-(N,N-Dimethylamino)-ethyl-4-azidonaphthylketon, 2-(N,N-Dimethylamino)-ethyl-4-azidobenzoat, 5-Azido-1-naphthyl-2'-(N,N-dimethylamino)ethylsulfon, N-(4-Sulfonylazidophenyl)maleinimid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclohexanon und 2,6-Bis-(p-azidobenzyliden)-4-methylcyclohexanon. Die Photoinitiatoren werden, falls sie eingesetzt werden, üblicherweise in Mengen von 0,01 bis 5 Gew.-%, bezogen auf die zu polymerisierenden Monomeren angewendet.

Bevorzugt werden erfindungsgemäß Dibenzoylperoxid, t-Butylperoxybenzoai, t-Butylperoxyacetat, 3-Chlorperbenzoesäure, Di-(3,5,5-trimethylhexanoyl)peroxid sowie t-Butyl-3,5,5-tri-methylhexanoyl)peroxid als Initiatoren eingesetzt.

Die Einstellung des Polymerisationsgrades und damit des Molekulargewichtes des Verarbeitungshilfsmittels lässt sich nach bekannten Methoden, wie z. B. durch das Verhältnis von Initiatoren zu Monomeren oder durch Zusatz von Reglern als Kettenübertragungsmittel erreichen. Bevorzugte Kettenübertragungsmittel sind Chlorkohlenwasserstoffe oder aliphatische Mercaptane, wie etwa Mercaptoethanol, Mercaptopropanol, n-Butylmercaptan, n-Dodecylmercaptan, tert.-Dodecylmercaptan oder Thioglykolsäure-2-ethylhexylester.

Nach der Polymerisation können gegebenenfalls noch in der Reaktionsmischung vorhandene Monomere durch einen Gasstrom, vorzugsweise durch einen Stickstoffstrom, aus der Reaktionsmischung ausgetrieben werden.

Die durch Polymerisation der oben beschriebenen Monomerkomponente in der geschmolzenen Lösemittelkomponente erhaltenen Polymere weisen vorzugsweise mindestens eine, besonders bevorzugt alle der folgenden Eigenschaften auf:

a) ein Gewichtsmittel des Molekulargewichts (Mw) in einem Bereich von $1\times10^2$ bis $5\times10^6$ g/mol (gemessen mit GPC gegen einen Polystyrolstandard);

b) eine Partikelgröße in einem Bereich von 100 bis 1.000 nm (gemessen mit einem Malvern Particle Sizer).

Ein erfindungsgemäß hergestelltes Polymeres kann dabei beispielsweise so eingestellt werden, dass es eine breite oder enge Molekulargewichtsverteilung in einem Molekulargewichtsbereich $M_w$ von etwa 1,2 bis etwa 3,8 * $10^5$ g/mol (Viskositätszahl (VZ) etwa 50 bis etwa 130 $cm^3/g$) oder eine breite oder enge Molekulargewichtsverteilung in einem Molekulargewichtsbereich $M_w$ von etwa 3,8 * $10^5$ bis etwa 1,3 * $10^6$ g/mol (VZ etwa 150 bis etwa 330 $cm^3/g$) oder eine breite oder enge Molekulargewichtsverteilung in einem Molekulargewichtsbereich $M_w$ von etwa 1,3 * $10^6$ bis etwa 5,0 * $10^6$ g/mol (VZ etwa 330 bis etwa 1200 $cm^3/g$).

Ein erfindungsgemäß hergestelltes Polymeres kann darüber hinaus eine Monomodale, bimodale oder trimodale oder höhermodale Molekulargewichtsverteilung aufweisen. Derartige bi-, tri- oder höhermodale Molekulargewichtsverteilungen können beispielsweise durch Modifizierung der Polymerisationsreaktion selbst, oder durch Mischen von Polymeren mit unterschiedlichem Molekulargewicht oder unterschiedlicher Molekulargewichtsverteilung erhalten werden.

Das so erhaltene Verarbeitungshilfsmittel kann in einem weiteren Verfahrensschritt beispielsweise auf Raumtemperatur abgekühlt werden. Sollte sich unter diesen Bedingungen eine feste Zusammensetzung bilden, was üblicherweise dann der Fall ist, wenn der Schmelzpunkt der Lösemittelkomponente oberhalb der Raumtemperatur liegt, so kann die feste Zusammensetzung beispielsweise durch Zerkleinerung, beispielsweise durch Zermahlen, in eine pattikuläre Form überführt. Dabei können die Verarbeitungshilfsmittel beispielsweise so zerkleinert werden, dass sie eine durch Siebanalyse bestimmte Partikelgröße in einem Bereich von 1 bis 2.000 µm, beispielsweise in einem Bereich von 5 bis 1.000 µm aufweisen. Die nach einem erfindungsgemäßen Verfahren erhaltenen Verarbeitungshilfsmittel können darüber hinaus beispielsweise aus der Schmelze zu Granulaten, Prills oder Pastillen verarbeitet werden.

Die nach dem erfindungsgemäßen Verfahrens hergestellten Verarbeitungshilfsmittel können im Rahmen der vorliegenden Erfindung beispielsweise nur aus dem aus der Monomerkomponente erhaltenen Polymeren und der Lösemittelkomponente bestehen. Es ist jedoch im Rahmen der vorliegenden Erfindung ebenfalls vorgesehen, dass nach dem erfindungsgemäßen Verfahren Verarbeitungshilfsmittel hergestellt werden, die weitere, üblicherweise bei der Stabilisierung von Poly merzusammensetzungen eingesetzte Zusatzstoffe enthalten.

In einer bevorzugten Ausführungsform des erfindungsgemäßen Verfahrens werden daher Verarbeitungshilfsmittel hergestellt, die weitere Zusatzstoffe, insbesondere Stabilisatoren, wie metallhaltige Stabilisatoren, Organophosphite, Säurefänger, wie Hydrotalcit, Antioxidantien, UV- oder IR-Absorber oder Mischungen aus mindestens zwei davon. Weitere bevorzugte Zusatzstoffe sind Costabilisatoren, Antistatikmittel, Gleitmittel, Weichmacher, Pigmente, Schlagzähmodifizierer, oder Füllstoffe.

Gegenstand der vorliegenden Erfindung sind daher auch Verarbeitungshilfsmittel, die nach einem erfindungsgemäßen Verfahren hergestellt wurden.

Als Zusatzstoffe geeignet sind beispielsweise Aminoalkohole. Als Aminoalkohole sind im Rahmen der vorliegende Erfindung grundsätzlich alle Verbindungen geeignet, die mindestens eine OH-Gruppe und eine primäre, sekundäre oder tertiäre Aminogruppe oder eine Kombination aus zwei oder mehr der genannten Aminogruppen aufweisen. Grundsätzlich sind im Rahmen der vorliegenden Erfindung sowohl feste als auch flüssige Aminoalkohole als Bestandteil der erfindungsgemäßen Verarbeitungshilfsmittel geeignet. Im Rahmen der vorliegenden Erfindung wird der Anteil an flüssigen Aminoalkoholen jedoch beispielsweise so gewählt, dass das gesamte Verarbeitungshilfsmittel im wesentlichen in fester Form vorliegt.

Im Rahmen einer weiteren bevorzugten Ausführungsform der vorliegenden Erfindung enthält ein erfindungsgemäßes Verarbeitungshilfsmittel höchstens etwa 5 Gew.-% an flüssigem Aminoalkohol oder einem Gemisch aus zwei oder mehr flüssigen Aminoalkoholen, vorzugsweise liegt der Anteil jedoch darunter, beispielsweise bei 1 Gew.-% oder weniger. Im Rahmen einer besonders bevorzugten Ausführungsform der vorliegenden Erfindung enthält ein erfindungsgemäßes Verarbeitungshilfsmittel keinen flüssigen Aminoalkohol.

Im Rahmen der vorliegenden Erfindung einsetzbare Aminoalkohole weisen im Rahmen einer bevorzugten Ausführungsform der vorliegenden Erfindung einen Schmelzpunkt von mehr als etwa 30 °C, insbesondere mehr als etwa 50 °C auf. Geeignete Aminoalkohole sind beispielsweise Mono- oder Polyhydroxyverbindungen die auf linearen oder verzweigten, gesättigten oder ungesättigten aliphatischen Mono- oder Polyaminen aufbauen.

Hierzu geeignet sind beispielsweise OH-Gruppen tragende Derivate primärer Mono- oder Polyaminoverbindungen mit 2 bis etwa 40, beispielsweise 6 bis etwa 20 C-Atomen. Beispielsweise sind dies entsprechende OH-Gruppen tragende Derivate von Ethylamin, n-Propylamin, i-Propylamin, n-Propylamin, sek.-Propylaniin, tert.-Butylamin, 1-Aminoisobutan, substituierten Aminen mit zwei bis etwa 20 C-Atomen wie 2-(N,N-Dimethylamino)-1-aminoethan. Geeignete OH-Gruppen tragende Derivate von Diaminen sind beispielsweise solche, die auf Diaminen mit einem Molekulargewicht von etwa 32 bis etwa 200 g/mol aufbauen, wobei die entsprechenden Diamine mindestens zwei primäre, zwei sekundäre oder eine primäre und eine sekundäre Aminogruppe aufweisen. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan. Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, l-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Besonders geeignet sind aliphatische Aminoalkohole mit 2 bis etwa 40, vorzugsweise 6 bis etwa 20 C-Atomen, beispielsweise 1-Amino-3,3-dimethyl-pentan-5-ol, 2-Aminohexan-2',2''-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen in Betracht kommen.

Im Rahmen einer besonders bevorzugten Ausführungsform der vorliegenden Erfindung werden als Aminoalkohole heterocyclische Verbindungen eingesetzt, die über ein cyclisches, Aminogruppen aufweisendes Ringsystem verfügen, wobei die OH-Gruppen entweder direkt am Ring oder vorzugsweise über Spacer mit diesem verbunden sind.

Im Rahmen einer besonders bevorzugten Ausführungsform der vorliegenden Erfindung werden dabei heterocyclische Aminoalkohole eingesetzt, die mindestens 2, vorzugsweise mindestens 3 Aminogruppen im Ring aufweisen. Als zentraler Ringbestandteil der erfindungsgemäß einsetzbaren Aminoalkohole besonders geeignet sind hierbei die Trimerisierungsprodukte von Isocyanaten.

Besonders bevorzugt werden dabei hydroxylgruppenhaltige Isocyanurate der allgemeinen Formel I

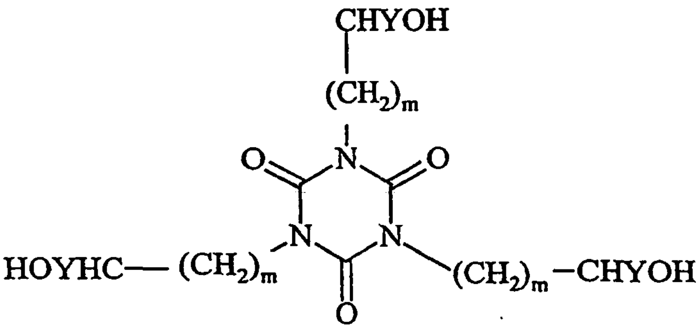

(I),

worin die Gruppen Y und die Indices m jeweils gleich oder verschieden sind und m für eine ganze Zahl von 0 bis 20 und Y für ein Wasserstoffatom oder eine lineare oder verzweigte, gesättigte oder ungesättigte Alkylgruppe mit 1 bis etwa 10 C-Atomen steht. Besonders bevorzugt ist im Rahmen der vorliegenden Erfindung der Einsatz von Tris(hydroxymethyl)isocyanurat (THEIC) als Bestandteil eines erfindungsgemäßen Verarbeitungshilfsmittels.

Ein erfindungsgemäßes Verarbeitungshilfsmittel kann beispielsweise nur einen Aminoalkohol enthalten. Es ist im Rahmen der vorliegenden Erfindung jedoch ebenso vorgesehen, dass ein erfindungsgemäßes Verarbeitungshilfsmittel ein Gemisch aus zwei oder mehr verschiedenen Aminoalkoholen enthält.

Ebenfalls als Zusatzstoffe im Rahmen der vorliegenden Erfindung geeignet sind Verbindungen mit einem Strukturelement der allgemeinen Formel II

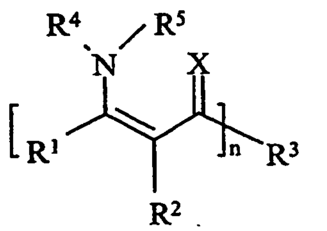

(II),

worin n für eine Zahl von 1 bis 100.000, X für O oder S, die Reste $R^4$, $R^5$, $R^1$ und $R^2$ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest $R^1$ für einen gegebenenfalls substituierten Acylrest mit 2 bis 44 C-Atomen steht oder die Reste $R^1$ und $R^2$ zu einem aromatischen oder heterocyclischen System verbunden sind und worin der Rest $R^3$ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, $NR^4$ oder $CH_2C(O)$ mit dem in Klammern stehenden Strukturelement verbunden ist, steht oder der Rest $R^3$ mit dem Rest $R^1$ so verbunden ist, dass insgesamt ein gegebenenfalls substituiertes, gesättigtes oder ungesättigtes heterocyclisches Ringsystem mit 4 bis 24 C-Atomen gebildet wird, oder ein Gemisch aus zwei oder mehr Verbindungen der allgemeinen Formel II, enthalten.

Im Rahmen einer bevorzugten Ausführungsform der vorliegenden Erfindung wird als Verbindung der allgemeinen Formel II eine auf einer $\alpha,\beta$-ungesättigten $\beta$-Aminocarbonsäure, insbesondere eine auf $\beta$-Aminocrotonsäure basierende Verbindung eingesetzt. Besonders geeignet sind hierbei die Ester oder Thioester der entsprechenden Aminocarbonsäuren mit einwertigen oder mehrwertigen Alkoholen oder Mercaptanen wobei X in den genannten Fällen jeweils für O oder S steht.

Wenn der Rest $R^3$ zusammen mit X für einen Alkohol- oder Mercaptanrest steht, so kann ein derartiger Rest beispielsweise aus Methanol, Ethanol, Propanol, Isopropanol, Butanol, 2-Ethylhexanol, Isooctanol, Isononanol, Decanol, Laurylalkohol, Myristylalkohol, Palmitylalkohol, Stearylalkohol, Ethylenglykol, Propylenglykol, 1,3-Butandiol, 1,4-Butandiol, 1,6-Hexandiol, 1,10-Decandiol, Diethylenglykol, Thio-Diethanol, Trimethylolpropan, Glyzerin, Tris-(2-hydroxymethyl)-isocyanurat, Triethanolamin, Pentaerythrit, Di-Trimethylolpropan, Diglyzerin, Sorbitol, Mannitol, Xylitol, Di-Pentaerythrit sowie den entsprechenden Mercaptoderivaten der genannten Alkohole gebildet werden.

Im Rahmen einer besonders bevorzugten Ausführungsform der vorliegenden Erfindung wird als Verbindung der allgemeinen Formel II eine Verbindung eingesetzt, in der $R^1$ für einen linearen Alkylrest mit 1 bis 4 C-Atomen, $R^2$ für Wasserstoff und $R^3$ für einen linearen oder verzweigten, gesättigten, ein- bis sechswertigen Alkyl- oder Alkylenrest mit 2 bis 12 C-Atomen oder einen linearen, verzweigten oder cyclischen 2- bis 6-wertigen Etheralkoholrest oder Thioetheralkoholrest steht.

Geeignete Verbindungen der allgemeinen Formel II umfassen beispielsweise $\beta$-Aminocrotonsäurestearylester, 1,4-Butandiol-di($\beta$-aminocrotonsäure)ester, Thio-diethanol-$\beta$-aminocrotonsäureester, Trimethylolpropan-tri-$\beta$-aminocrotonsäureester, Pentaerythrit-tetra-$\beta$-aminocrotonsäureester, Dipentaerythrit-hexa-$\beta$-aminocrotonsäureester und dergleichen. Die genannten Verbindungen können in einem erfindungsgemäßen Verarbeitungshilfsmittel jeweils alleine oder als Gemisch aus zwei oder mehr davon enthalten sein.

Ebenfalls im Rahmen der vorliegenden Erfindung als Verbindungen der allgemeinen Formel II geeignet sind Aminouracilverbindungen der allgemeinen Formel III

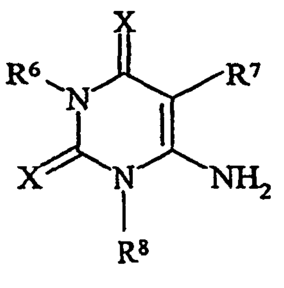

(III),

worin X fiir S oder O steht und worin die Reste $R^6$ und $R^7$ unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen und der Rest $R^8$ für Wasserstoff, einen gegebenenfalls substituierten linearen oder verzweigten, gesättigten oder ungesättigten aliphatischen Kohlenwasserstoffrest mit 1 bis 44 C-Atomen, einen gegebenenfalls substituierten gesättigten oder ungesättigten cycloaliphatischen Kohlenwasserstoffrest mit 6 bis 44 C-Atomen oder einen gegebenenfalls substituierten aromatischen Kohlenwasserstoffrest mit 6 bis 44 C-Atomen steht.

Die Verbindung gemäß Formel III fällt damit unter die Verbindungen gemäß. Formel II, wobei n in der allgemeinen Formel II für 1 und die Reste $R^1$ und $R^3$ gemäß der allgemeinen Formel II zu dem Strukturelement der allgemeinen Formel IV

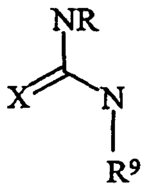

(IV),

verbunden sind, worin X für S oder O und R für $R^6$ oder $R^8$ steht. $R^1$ steht im Falle einer Verbindung der allgemeinen Formel IV also für N-$R^9$, während $R^3$ für -RN-C=X steht und beide Reste über eine N-C-Bindung kovalent zu einem heterocyclischen Ring verknüpft sind.

Vorzugsweise werden im Rahmen der vorliegenden Erfindung Verbindungen der allgemeinen Formel IV eingesetzt, bei denen $R^9$ für Wasserstoff steht.

Im Rahmen einer weiteren bevorzugten Ausführungsform der vorliegenden Erfindung werden in einem erfindungsgemäßen Verarbeitungshilfsmittel Verbindungen der allgemeinen Formel III eingesetzt, bei denen $R^6$ und $R^8$ für einen linearen oder verzweigten Alkylrest mit 1 bis 6 C-Atomen, beispielsweise Methyl, Ethyl, Propyl, Butyl, Pentyl oder Hexyl, einen mit OH-Gruppen substituierten linearen oder verzweigten Alkylrest mit 1 bis 6 C-Atomen, beispielsweise Hydroxymethyl, Hydroxyethyl, Hydroxypropyl, Hydroxybutyl, Hydroxypentyl oder Hydroxyhexyl, einen Aralkylrest mit 7 bis 9 C-Atomen, beispielsweise Benzyl, Phenylethyl, Phenylpropyl, Dimethylbenzyl oder Phenylisopropyl, wobei die genannten Aralkylreste beispielsweise mit Halogen, Hydroxy oder Methoxy substituiert sein können oder einen Alkenylrest mit 3 bis 6 C-Atomen, beispielsweise Vinyl, Alkyl, Methallyl, 1-Butenyl oder 1-Hexenyl stehen.

Im Rahmen einer bevorzugten Ausführungsform der vorliegenden Erfindung werden in einem erfindungsgemäßen Verarbeitungshilfsmittel Verbindungen der allgemeinen Formel III eingesetzt, worin $R^6$ und $R^8$ für Wasserstoff, Methyl, Ethyl, n-Propyl, Isopropyl, n-, i-, sec- oder t-Butyl stehen.

Ebenfalls als Verbindungen der allgemeinen Formel II geeignet sind beispielsweise Verbindungen, in denen die Reste $R^1$ und $R^2$ zu einem aromatischen oder heteroaromatischen System verbunden sind, beispielsweise Aminobenzoesäure, Aminosalicylsäure oder Aminopyridincarbonsäure und deren geeignete.Derivate.

Als weitere Zusatzstoffe eignen sich im Rahmen der vorliegenden Erfindung beispielsweise Verbindungen, die inindestens ein mercaptofunktionelles, $sp^{2-}$hybridisiertes C-Atom aufweisen. Unter Verbindungen, die mindestens ein mercaptofunktionelles, $sp^2$-hybridisieries C-Atom aufweisen werden im Rahmen der vorliegenden Erfindung grundsätzlich alle Verbindungen verstanden, die ein Strukturelement Z=CZ-SH oder ein Strukturelement $Z_2C$=S aufweisen, wobei beide Strukturelemente tautomere Formen einer einzigen Verbindung sein können. Das $sp^2$-hybridisierte C-Atom kann dabei Bestandteil einer gegebenenfalls substituierten aliphatischen Verbindung oder Bestandteil eines aromatischen Systems sein. Somit steht Z für eine aliphatische Verbindung oder einen Bestandteil einer aliphatischen Verbindung oder einen Bestandteil eines aromatischen Systems. Geeignete Verbindungstypen sind beispielsweise Thiocarbamidsäurederivate, Thiocarbamate, Thiocarbonsäuren, Thiobenzoesäurederivate, Thioacetonderivate oder Thioharnstoff oder Thioharnstoffderivate. Geeignete Verbindungen mit mindestens einem mercaptofunktionellen, $sp^2$-hybridisierten C-Atom werden beispielsweise in der nicht vorveröffentlichten deutschen Patentanmeldung mit dem Aktenzeichen 101 09 366.7 genannt.

Im Rahmen einer bevorzugten Ausführungsform der vorliegenden Erfindung wird als Verbindung mit mindestens einem mercaptofunktionellen, $sp^2$-hybridisierten C-Atom Thioharnstoff oder ein Thioharnstoffderivat eingesetzt.

Ebenfalls als Zusatzstoffe für ein erfindungsgemäßes Verarbeitungshilfsmittel eignen sich beispielsweise Carbazol oder Carbazolderivate oder Gemische aus zwei oder mehr davon.

Weiterhin als Zusatzstoffe geeignet sind beispielsweise 2,4-Pyrrolidindion oder dessen Derivate, wie sie beispielsweise in der nicht vorveröffentlichten deutschen Patentanmeldung mit dem Aktenzeichen 101 09 366.7 genannt werden.

Als Zusatzstoffe eignen sich weiterhin beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnußöl, epoxidiertes Maisöl, epoxidiertes Baumwollsamenöl sowie Glycidylverbindungen.

Glycidylverbindungen enthalten eine Glycidylgruppe, die direkt an ein Kohlenstoff-, Sauerstoff-, Stickstoff- oder

Schwefelatom gebunden ist. Glycidyl- oder Methylglycidylester sind durch Umsetzung einer Verbindung mit mindestens einer Carboxylgruppe im Molekül und Epichlorhydrin bzw. Glyzerindichlorhydrin bzw. Methyl-epichlorhydrin erhältlich. Die Umsetzung erfolgt zweckmäßigerweise in Gegenwart von Basen.

Als Verbindungen mit mindestens einer Carboxylgruppe im Molekül können beispielsweise aliphatische Carbonsäuren eingesetzt werden. Beispiele für diese Carbonsäuren sind Glutarsäure, Adipinsäure, Pimelinsäure, Korksäure, Azelainsäure, Sebacinsäure oder dimerisierte oder trimerisierte Linolsäure, Acrylsäure, Methacrylsäure, Capronsäure, Caprylsäure, Laurinsäure, Myristinsäure, Palmitinsäure, Stearinsäure oder Pelargonsäure sowie die im weiteren Verlauf dieses Textes erwähnten Mono- oder Polycarbonsäuren. Ebenfalls geeignet sind cycloaliphatische Carbonsäuren wie Cyclohexancarbonsäure, Tetrahydrophthalsäure, 4-Methyltetrahydrophthalsäure, Hexahydrophthalsäure, Endomethylentetrahydrophthalsäure oder 4-Methylhexahydrophthalsäure. Weiterhin geeignet sind aromatische Carbonsäuren wie Benzoesäure, Phthalsäure, Isophthalsäure, Trimellithsäure oder Pyromellithsäure.

Glycidylether oder Methylglycidylether lassen sich durch Umsetzung einer Verbindung mit mindestens einer freien alkoholischen OH-Gruppe oder einer phenolischen OH-Gruppe und einem geeignet substituierten Epichlorhydrin unter alkalischen Bedingungen oder in Anwesenheit eines sauren Katalysators und anschließender Alkalibehandlung erhalten. Ether dieses Typs leiten sich beispielsweise von acyclischen Alkoholen wie Ethylenglykol, Diethylenglykol oder höheren Poly(oxyethylen)glykolen, Propan-1,2-diol oder Poly(oxypropylen)glykolen, Butan-1,4-diol, Poly(oxytetramethylen)glykolen, Pentan-1,5-diol, Hexan-1,6-diol, Hexan-2,4,6-triol, Glyzerin, 1,1,1-Trimethylolpropan, Bis-Trimethylolpropan, Pentaerythrit, Sorbit sowie von Polyepichlorhydrinen, Butanol, Amylalkohol, Pentanol sowie von monofunktionellen Alkoholen wie Isooctanol, 2-Ethylhexanol, Isodecanol oder technischen Alkoholgemischen, beispielsweise technischen Fettalkoholgemischen, ab.

Geeignete Ether leiten sich auch von cycloaliphatischen Alkoholen wie 1,3- oder 1,4-Dihydroxycyclohexan, Bis(4-hydroxycyclohexyl)methan, 2,2-Bis(4-hydroxycyclohexyl)propan oder 1,1-Bis-(hydroxymethyl)cyclohexan-3-en ab oder sie besitzen aromatische Kerne wie N,N-Bis-(2-hydroxyethyl)anilin. Geeignete Epoxyverbindungen können sich auch von einkernigen Phenolen ableiten, beispielsweise von Phenol, Resorcin oder Hydrochinon, oder sie basieren auf mehrkemigen Phenolen wie Bis(4-hydroxyphenyl)methan, 2,2-Bis (4-hydroxyphenyl)propan, 2,2-Bis(3,5-dibrom-4-hydroxyphenyl)propan, 4,4'-Dihydroxydiphenylsulfonen oder auf unter sauren Bedingungen erhaltenen Kondensationsprodukten von Phenol mit Formaldehyd, beispielsweise Phenol-Novolaken.

Weitere im Rahmen der vorliegenden Erfindung als Zusatzstoffe geeignete, endständige Epoxide sind beispielsweise Glycidyl-1-naphthylether, Glycidyl-2-phenylphenylether, 2-Diphenylglycidylether, N-(2,3-Epoxypropyl) phthalimid oder 2,3-Epoxypropyl-4-methoxyphenylether.

Ebenfalls geeignet sind N-Glycidylverbindungen, wie sie durch Dehydrochlorierung der Reaktionsprodukte von Epichlorhydrin mit Aminen, die mindestens ein Aminowasserstoffatom enthalten, erhältlich sind. Solche Amine sind beispielsweise Anilin, N-Methylanilin, Toluidin, n-Butylamin, Bis(4-aminophenyl)methan, m-Xylylendiamin oder Bis(4-methylaminophenyl)methan.

Ebenfalls geeignet sind S-Glycidylverbindungen, beispielsweise Di-S-glycidyletherderivate, die sich von Dithiolen wie Ethan-1,2-dithiol oder Bis(4-mercaptomethylphenyl)ether ableiten.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und diese als Bestandteil der Offenbarung des vorliegenden Textes betrachtet wird.

Weiterhin als Zusatzstoffe im Rahmen der vorliegenden Erfindung geeignet sind 1,3-Dicarbonylverbindungen, insbesondere die β-Diketone und β-Ketoester. Im Rahmen der vorliegenden Erfindung geeignet sind Dicarbonylverbindungen der allgemeinen Formel R'C(O)CHR"-C(O)R''', wie sie beispielsweise auf S. 5 der EP- 1 046 668 beschrieben sind, auf die insbesondere im Hinblick auf die Reste R', R" und R''' ausdrücklich bezug genommen wird und deren Offenbarung als Bestandteil der Offenbarung des vorliegenden Textes betrachtet wird. Besonders geeignet sind hierbei beispielsweise Acetylaceton, Butanoylaceton, Heptanoylaceton, Stearoylaceton, Palmitoylaceton, Lauroylaceton, 7-tert-Nonylthioheptandion-2,4, Benzoylaceton, Dibenzoylmethan, Lauroylbenzoylmethan, Palmitoylbenzoylmethan, Stearoylbenzoylmethan, Isooctylbenzoylmethan, 5-Hydroxycapronylbenzoylmethan, Tribenzoylmethan, Bis(4-methylbenzoyl)methan, Benzoyl-p-chlorbenzoylmethan, Bis(2-hydroxybenzoyl)methan, 4-Methoxybenzoylbenzoylmethan, Bis (4-methoxybenzoyl)methan, Benzoylformylmethan, Benzoylacetylphenylmethan, 1-Benzoyl-1-acetylnonan, Stearoyl-4-methoxybenzoylmethan, Bis(4-tert-butylbenzoyl)methan, Benzoylphenylacetylmethan, Bis(cyclohexanoyl)methan, Dipivaloylmethan, 2-Acetylcyclopentanon, 2-Benzoylcyclopentanon, Diacetessigsäuremethyl-, -ethyl-, -butyl-, 2-ethylhexyl-, -dodecyl- oder -octadecylester sowie Propionyl- oder Butyrylessigsäureester mit 1 bis 18 C-Atomen sowie Stearoylessigsäureethyl-,- propyl-, -butyl-, hexyl- oder -octylester oder mehrkernige β-Ketoester wie sie in der EP-A 433 230 beschrieben sind, auf die ausdrücklich bezug genommen wird, oder Dehydracetsäure sowie deren Zink-, magnesium- oder Alkalisalze oder die Alkali- Erdalkali- oder Zinkchelate der genannten Verbindungen, sofern diese existieren.

1,3-Diketoverbindungen können in einem erfindungsgemäßen Verarbeitungshilfsmittel in einer Menge von bis zu etwa 20 Gew.%, beispielsweise bis zu etwa 10 Gew.%, enthalten sein.

Weiterhin als Zusatzstoffe geeignet sind Polyole. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxymethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-$\alpha$-D-Glycopyranosyl-D-mannit-dihydrat.

Ebenfalls als Zusatzstoffe geeignet sind beispielsweise sterisch gehinderte Amine wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Die als Zusatzstoffe geeigneten sterisch gehinderten Amine können in einem erfindungsgemäßen Verarbeitungshilfsmittel in einer Menge von bis zu etwa 30 Gew.-%, beispielsweise bis zu etwa 10 Gew.-% enthalten sein.

Weiterhin als Zusatzstoffe geeignet sind Hydrotalcite, Zeolithe und Alkalialumocarbonate. Geeignete Hydrotalcite, Zeolithe und Alkalialumocarbonate sind beispielsweise in der EP-A 1 046 668 auf den Seiten 27 bis 29, der EP-A 256 872 auf den Seiten 3, 5 und 7, der DE-C 41 06 411 auf Seite 2 und 3 oder der DE-C 41 06 404 auf Seite 2 und 3 beschrieben. Auf diese Druckschriften wird ausdrücklich bezug genommen und deren Offenbarung an den angegebenen Stellen wird als Bestandteil der Offenbarung des vorliegenden Textes betrachtet.

Die als Zusatzstoffe geeigneten Hydrotalcite, Zeolithe und Alkalialumocarbonate können in einem erfindungsgemäßen Verarbeitungshilfsmittel in einer Menge von bis zu etwa 50 Gew.-%, beispielsweise bis zu etwa 30 Gew.-% enthalten sein.

Ebenfalls als Zusatzstoffe geeignet sind beispielsweise Hydrocalumite der allgemeinen Formel V

$$M^{2+}_{(2+x)}Al^{3+}_{(1+y)}(OH)_{(6+z)}A^{j-}_{a}[B_r]^{nl}_{b}{*}m\ H_2O \qquad (V),$$

worin M für Calcium, Magnesium oder Zink oder Gemische aus zwei oder mehr davon, A für ein j-wertiges anorganisches oder organisches Säureanion, j für 1, 2 oder 3, B für ein von A verschiedenes anorganisches oder organisches Säureanion steht, r für eine ganze Zahl $\geq$ 1 steht und, sofern r >1 ist, den Polymerisationsgrad des Säureanions angibt und 1 für 1, 2 3 oder 4 steht und die Wertigkeit des Säureanions angibt, wobei für r = 1 1 für 2, 3 oder 4 steht und für r > 1 1 die Wertigkeit der einzelnen Monomereinheiten des Polyanions angibt und für 1, 2, 3 oder 4 steht und rl die Gesamtwertigkeit des Polyanions angibt und die folgenden Regeln für die Parameter x, y, a, b, r, z, und j gelten:

$$0 \leq x < 0{,}6,$$

$$0 \leq y < 0{,}4,$$

wobei entweder x = 0 oder y = 0,

$$0 < a < 0{,}8/r$$

und

$$z = 1 + 2x + 3y - ja - r/b.$$

Im Rahmen einer bevorzugten Ausführungsform der vorliegenden Erfindung werden als Zusatzstoffe Verbindungen der allgemeinen Formel V eingesetzt, worin M für Calcium steht, das gegebenenfalls im Gemisch mit Magnesium oder Zink oder Magnesium und Zink vorliegen kann.

In der allgemeinen Formel V steht A für ein r-wertiges anorganisches oder organisches Säureanion, wobei r für 1, 2 oder 3 steht. Beispiele für im Rahmen von erfindungsgemäß einsetzbaren Hydrocalumiten vorliegende Säureanionen sind Halogenidionen, $SO_3^{2-}$, $SO_4^{2-}$, $S_2O_3^{2-}$, $S_2O_4^{2-}$, $HPO_3^{2-}$, $PO_4^{3-}$, $CO_3^{2-}$, Perchlorate, Borate, Alkyl- und Dialkylphosphate, Alkylmercaptide und Alkylsulfonate, worin die Alkylgruppen gleich oder verschieden, geradkettig, verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat,

Aconitat, Trimesinat, Pyromellitat, Maleat, Tartrat, Citrat sowie Anionen der isomeren Formen der Hydroxyphthalsäure oder der Hydroxymesinsäure. Im Rahmen einer bevorzugten Ausführungsform der vorliegenden Erfindung steht A für ein anorganisches Säureanion, insbesondere ein Halogenidion, beispielsweise $F^-$, $Cl^-$ oder $Br^-$, vorzugsweise für $Cl^-$.

In der allgemeinen Formel V steht B für ein Säureanion, das von A verschieden ist. Für den Fall, dass in der allgemeinen Formel V r für die Zahl 1 steht, steht Buchstabe B für ein 1-wertiges, anorganisches oder organisches Säureanion, wobei 1 für die Zahl 2, 3 oder 4 steht. Beispiele für im Rahmen von erfindungsgemäß einsetzbaren Verbindungen der allgemeinen Formel V vorliegende Säureanionen B sind beispielsweise $O^{2-}$, $SO_3^{2-}$, $SO_4^{2-}$, $S_2O_3^{2-}$, $S_2O_4^{2-}$, $HPO_3^{2-}$, $PO_4^{3-}$, $CO_3^{2-}$ , Alkyl- und Dialkylphosphate, Alkylmercaptide und Alkylsulfonate, worin die Alkylgruppen, gleich oder verschieden, geradkettig oder verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Vorzugsweise steht B im Rahmen der vorliegenden Erfindung in Formel V für ein Borat oder ein Anion einer gegebenenfalls funktionalisierten Di-, Tri- oder Tetracarbonsäure. Besonders bevorzugt sind dabei Carbonsäureanionen und Anionen von Hydroxycarbonsäuren mit mindestens zwei Carboxylgruppen, wobei Citrate ganz besonders bevorzugt sind.

Für den Fall dass r in der allgemeinen Formel V für eine Zahl von mehr als 1 steht, steht der Term $[B_r]^{r1-}$ für ein anorganisches oder organisches Polyanion mit dem Polymerisationsgrad r und der Wertigkeit 1 der einzelnen Monomereinheiten des Polyanions mit der Gesamtwertigkeit rl, wobei 1 gleich oder größer als 1 ist. Beispiele für geeignete Polyanionen $[B_r]^{r1-}$ sind Polyacrylate, Polycarboxylate, Polyborate, Polysilikate, Polyphosphate oder Polyphosphonate.

In allen obengenannten Fällen können die Säureanionen A und B in einem beliebigen Verhältnis a/b in den Verbindungen der allgemeinen Formel V enthalten sein.

Bei den Verbindungen der allgemeinen Formel V handelt es sich nicht um schichtartig aufgebaute Verbindungen vom Hydrotalcit- bzw. Hydroalumittyp, sondern um eine physikalische Mischung von $M^{2+}$/Aluminiumoxidhydraten mit Salzen zweiwertiger Metalle. Röntgendiffraktogramme der in der erfindungsgemäßen Zusammensetzung eingesetzten Verbindungen der allgemeinen Formel V zeigen eindeutig, dass es sich nicht um diskrete kristalline Verbindungen eines bekannten Typs sondern um röntgenamorphe Mischungen handelt.

Zur Herstellung der Verbindungen gemäß der allgemeinen Formel V können, bekannten Verfahren folgend, Lösungen bzw. Suspensionen oxidischer Formen der gewünschten Kationen (z.B. $NaAlO_2$, $Ca(OH)_2$, $Zn(OH)_2$, $Al(OH)_3$) mit Lösungen oder Suspensionen von Salzen oder den entsprechenden Säuren der gewünschten Anionen gemischt und bei Temperaturen zwischen 40 und 95 °C zur Reaktion gebracht werden. Dabei können die Reaktionszeiten zwischen 15 und 300 Minuten variiert werden.

Wenn eine Oberflächenbehandlung der Reaktionsprodukte gewünscht ist, können die Reaktionsprodukte direkt mit dem Oberflächenbehandlungsmittel versetzt, das Produkt durch Filtration von der Mutterlauge getrennt und bei geeigneten Temperaturen zwischen 100 und 250 °C getrocknet werden. Die zugesetzte Menge an Oberflächenbehandlungsmittel beträgt beispielsweise etwa 1 bis etwa 20 Gew.-%.

Verbindungen der allgemeinen Formel V können in einem erfindungsgemäßen Verarbeitungshilfsmittel in einer Menge von bis zu etwa 50 Gew.-%, beispielsweise bis zu etwa 30 oder bis zu etwa 15 Gew.-% eingesetzt werden.

Ebenfalls als Zusatzstoffe geeignet sind Metalloxide, Metallhydroxide und Metallseifen von gesättigten, ungesättigten, geradkettigen oder verzweigten, aromatischen, cycloaliphatischen oder aliphatischen Carbonsäuren oder Hydroxycarbonsäuren mit vorzugsweise etwa 2 bis etwa 22 C-Atomen.

Als Metallkationen weisen die als Zusatzstoffe geeigneten Metalloxide, Metallhydroxide oder Metallseifen vorzugsweise ein zweiwertiges Kation auf, besonders geeignet sind die Kationen von Calcium oder Zink oder deren Gemische.

Beispiele für geeignete Carbonsäureanionen umfassen Anionen von monovalenten Carbonsäuren wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, Sorbinsäure, Anionen von divalenten Carbonsäuren bzw. deren Monoestern wie Oxalsäure, Malonsäure, Maleinsäure, Weinsäure, Zimtsäure, Mandelsäure, Äpfelsäure, Glykolsäure, Oxalsäure, Salicylsäure, Polyglykoldicarbonsäuren mit einem Polymerisationsgrad von etwa 10 bis etwa 12, Phthalsäure, Isophthalsäure, Terephthalsäure oder Hydroxyphthalsäure, Anionen von tri- oder tetravalenten Carbonsäuren bzw. deren Mono-, Di- oder Triestern wie sie in Hemimellithsäure, Trimellithsäure, Pyromellithsäure oder Zitronensäure sowie ferner sogenannte überbasische Carboxylate wie sie beispielsweise in der DE-A 41 06 404 oder der DE-A 40 02 988 beschrieben werden, wobei die Offenbarung der letztgenannten Dokumente als Bestandteil der Offenbarung des vorliegenden Textes betrachtet wird.

Ein erfindungsgemäßes Verarbeitungshilfsmittel kann darüber hinaus weiterhin als Thermostabilisatorkomponente eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Methylzinn-tris-(isooctyl-3-mercaptopropionat), Methylzinn-tris-(isodecyl-thioglycolat), Dimethylzinn-bis-(isooctyl-thioglycolat), Dibutylzinn-bis-(isooctylthioglycolat), Monobutylzinn-tris-(isooctyl-thioglycolat), Dioctylzinn-bis-(isooctyl-thioglycolat), Monooctylzinn-tris-(isooctyl-thioglycolat) oder Dimethylzinn-bis-(2-ethylhexyl-β-mercaptopropionat).

Darüber hinaus sind die in der EP-A 0 742 259 auf den Seiten bis 18 bis 29 genannten und in ihrer Herstellung beschriebenen Organozinnverbindungen als Zusatzstoffe einsetzbar. Auf die obengenannte Offenbarung wird ausdrücklich Bezug genommen, wobei die dort genannten Verbindungen und deren Herstellung als Bestandteil der Offenbarung des vorliegenden Textes verstanden werden.

Ein erfindungsgemäßes Verarbeitungshilfsmittel kann die beschriebenen Organozinnverbindungen in einer Menge von bis zu etwa 20 Gew.-%, insbesondere bis etwa 10 Gew.-%, enthalten.

Im Rahmen einer weiteren Ausführungsform der vorliegenden Erfindung kann ein erfindungsgemäßes Verarbeitungshilfsmittel organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierte Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(Octylphenyl)-, Tribenzyl-, Butyldikresyl-, Octyl-di(octylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Ein erfindungsgemäßes Verarbeitungshilfsmittel kann die beschriebenen Phosphitverbindungen in einer Menge von bis zu etwa 30 Gew.-%, insbesondere bis etwa 10 Gew.-%, enthalten.

Ein erfindungsgemäßes Verarbeitungshilfsmittel kann weiterhin als Zusatzstoffe blockierte Mercaptane enthalten, wie sie in der EP-A 0 742 259 auf den Seiten 4 bis 18 genannt werden. Auf die Offenbarung in der angegebenen Schrift wird ausdrücklich Bezug genommen, sie wird als Bestandteil der Offenbarung des vorliegenden Textes verstanden.

Ein erfindungsgemäßes Verarbeitungshilfsmittel kann die beschriebenen blockierten Mercaptane in einer Menge von bis zu etwa 30 Gew.-%, insbesondere bis zu etwa 10 Gew.-%, enthalten.

Bei den ebenfalls als Zusatzstoffe geeigneten Antioxidantien handelt es sich vorzugsweise um phenolische Antioxidantien, wie z. B. 2,6-Di-t-butyl-4-methylphenol, styrolisiertes Phenol, 2,2'-Methylen-bis(4-methyl-6-t-butylphenol), 2,2'-Bis-(4-hydroxyphenol)propan, Octadecyl-3-(3',5'-di-t-butyl-4-hydroxyphenol)propionate oder Pentaerythritoltetrakis(3',5'-di-t-butyl-4-hydroxyphenol)propionat.

Als stabilisierend wirkende UV-Absorber werden vorzugsweise Benzophenone, wie etwa 2-Hydroxy-4-methoxybenzophenon oder 2-Hydroxy-4-octoxybenzophenon, Benzotriazole, wie etwa 2-(2'-Hydroxy-5'-methylphenyl)benzotriazol, Salicylate, wie etwa Phenylsalicylat, Nickelsalze, wie etwa Nickel-bis(octylphenylsulfid) oder Nickel-bis[O-ethyl (3,5-di-t-butyl-4-hydroxybenzyl)]phosphonat, oder sterisch gehinderte Amine, wie etwa Bis(2,2,6,6-tetramethylpiperidinyl-4)sebacat, als Zusatzstoffe eingesetzt. Bevorzugte IR-Absorber als Stabilisatoren sind 2-Hydroxy-4-Octoxybenzophenon und Ethyl-2-cyano-3,3-diphenylacrylat.

Ebenfalls als Zusatzstoffe geeignet sind anorganische oder organische Perchlorate.

Als anorganische Perchlorate sind beispielsweise halogenhaltige Salze der Oxysäuren, insbesondere die Perchlorate, geeignet. Beispiele für geeignete Perchlorate sind diejenigen der allgemeinen Formel $M(ClO_4)_n$, wobei M für Li, Na, K, Mg, Ca, Sr, Zn, Al, La oder Ce steht. Der Index n steht entsprechend der Wertigkeit von M für die Zahl 1, 2 oder 3. Die genannten Perchloratsalze können mit Alkoholen (Polyolen, Cyclodextrinen) oder Etheralkoholen beziehungsweise Esteralkoholen komplexiert sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglykole, sowie Di-, Tri- und Tetrapentaerythrit oder Polyvinylalkohol in verschiedenen Polymerisations- und Verseifungsgraden. Als Polyolpartialester sind Glycerinmonoether und Glycerinmonothioether bevorzugt. Ebenfalls geeignet sind Zuckeralkohole oder Thiozucker.

Als organische Perchlorate eignen sich beispielsweise die Oniumsalze der Perchlorsäure. Als "Oniumsalz" wird im Rahmen des vorliegenden Textes eine Verbindung bezeichnet, die ein Ammonium-, Sulfonium- oder Phosphoniumsalz darstellt. Bei einem "Oniumsalz" gemäß der vorliegenden Erfindung handelt es sich um ein organisches Oniumsalz. Dies bedeutet, dass die Ammonium-, Sulfonium- oder Phosphoniumgruppe des Oniumsalzes mindestens einen organischen Rest trägt. Ein Oniumsalz gemäß der vorliegenden Erfindung kann dabei, je nach Art der Oniurngruppe, 1, 2, 3 oder 4 organische Reste tragen. Die organischen Reste können dabei beispielsweise über eine C-X-Verknüpfung, wobei X für S, N oder P steht, mit dem Oniumrest verbunden sein. Es ist jedoch ebenso möglich, dass die organischen Reste über ein weiteres Heteroatom, beispielsweise ein O-Atom, mit dem Oniumrest verbunden sind.

Ein im Rahmen der vorliegenden Erfindung einsetzbares Oniumperchlorat weist dabei mindestens ein positiv geladenes N-, P- oder S-Atom oder zwei oder mehr solcher positiv geladenen N-, P- oder S-Atome oder Gemische aus

zwei oder mehr der genannten, positiv geladenen Atomtypen auf.

Als Phosphoniumperchlorate sind im Rahmen der vorliegenden Erfindung grundsätzlich alle Verbindungen einsetzbar, die durch entsprechende Umsetzung geeigneter Reaktanden zu einem Phosphoniumperchlorat fuhren. Dabei können erfindungsgemäß einsetzbare Phosphoniumperchlorate beispielsweise durch entsprechende Umsetzung von Tetraalkyl-, Tetracycloaklkyl- oder Tetraarylphosphorhalogeniden erhalten werden. Geeignete Phosphoniumperchlorate leiten sich daher beispielsweise von Tetraalkylphosphorsalzen wie Tetra-n-ethylphosphoniumbromid, Tetra-n-propylphosphoniumbromid, Tetra-n-butylphosphoniumbromid, Tetra-n-isobutylphosphoniumbromid, Tetra-n-pentylphosphoniumbromid, Tetra-n-hexylphosphoniumbromid und dergleichen Tetraalkylphosphorsalzen ab. Weiterhin eignen sich grundsätzlich zum Einsatz im Rahmen der erfindungsgemäßen Stabilisatorzusammensetzungen Phosphoniumperchlorate, die sich beispielsweise von Tetracycloalkylphosphorsalzen oder Tetraarylphosphorsalzen ableiten. Geeignete Phosphoniumperchlorate basieren daher beispielsweise auf Tetracycloalkyl- oder Tetraarylphosphorsalzen wie Tetracyclohexylphosphoniumbromid oder Tetraphenylphosphoniumbromid und dergleichen Tetracycloalkyl- oder Tetraarylphosphorsalzen.

Als Sulfoniumperchlorate sind im Rahmen der vorliegenden Erfindung grundsätzlich alle Verbindungen einsetzbar, die durch entsprechende Umsetzung geeigneter Reaktanden zu einem Sulfoniumperchlorat führen. Dabei können erfindungsgemäß einsetzbare Sulfoniumperchlorate beispielsweise durch entsprechende Umsetzung von Sulfiden wie Alkylmonosulfiden, Alkyldisulfiden, Dialkylsulfiden oder Poly(alkylsulfid)en erhalten werden. Geeignete Sulfoniumperchlorate leiten sich daher beispielsweise von Dialkylsulfiden wie Ethylbenzylsulfid, Allylbenzylsulfid oder Alkyldisulfiden wie Hexandisulfid, Heptandisulfid, Octandisulfid und dergleichen Alkyldisulfiden ab. Weiterhin eignen sich grundsätzlich zum Einsatz im Rahmen der erfindungsgemäßen Stabilisatorzusammensetzungen Sulfoniumperchlorate, die sich beispielsweise von Tricycloallcylsulfoniumsalzen oder Triarylsulfoniumsalzen ableiten. Geeignete Sulfoniumperchlorate basieren daher beispielsweise auf Tricycloalkyl- oder Triarylsulfoniumsalzen wie Tricyclohexylsulfoniumbromid oder Triphenylsulfoniumbromid und dergleichen Tricycloalkyl- oder Triarylsulfoniumsalzen. Ebenfalls geeignet sind Trialkyl-, Triaryl- oder Tricycloalkylsulfoxoniumsalze wie Trimethylsulfoxoniumperchlorat.

Als Ammoniumperchlorate sind im Rahmen der vorliegenden Erfindung grundsätzlich alle Verbindungen einsetzbar, die durch entsprechende Umsetzung geeigneter Reaktanden zu einem Ammoniumperchlorat führen. Dabei können erfindungsgemäß einsetzbare Ammoniumperchlorate beispielsweise durch entsprechende Umsetzung von Aminen oder Amiden wie Alkylmonoaminen, Alkylendiaminen, Alkylpolyaminen, sekundären oder tertiären Aminen erhalten werden. Geeignete Ammoniumperchlorate leiten sich daher beispielsweise von primären Mono- oder Polyaminoverbindungen mit 2 bis etwa 40, beispielsweise 6 bis etwa 20 C-Atomen ab. Beispielsweise sind dies Ethylamin, n-Propylamin, i-Propylamin, n-Butylamin, sek.-Butylamin, tert.-Butylamin, substituierte Amine mit 2 bis etwa 20 C-Atomen wie 2-(N,N-Dimethylamino)-1-aminoethan. Geeignete Diamine weisen beispielsweise zwei primäre, zwei sekundäre zwei tertiäre oder eine primäre und eine sekundäre oder eine primäre und eine tertiäre oder eine sekundäre und eine tertiäre Aminogruppe auf. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan oder tertiäre Amine wie Triethylamin, Tributylamin, Trihexylamin, Triheptylamin, Trioctylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo [3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Besonders geeignet und im Rahmen der vorliegenden Erfindung bevorzugt sind aliphatische Aminoalkohole mit 2 bis etwa 40, vorzugsweise 6 bis etwa 20 C-Atomen, beispielsweise Triethanolamin, Tripropanolamin, Triisopropanolamin, Tributanolamin, Tri-tert-butanolamin, Tripentanolamin, 1-Amino-3,3-dimethylpentan-5-ol, 2-Aminohexan-2',2''-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-l-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen eingesetzt werden.

Die genannten Zusatzstoffe können im erfindungsgemäßen Verarbeitungshilfsmittel insgesamt in einer Menge von etwa 0,01 bis etwa 70 Gew.-%, besonders bevorzugt in einer Menge in einem Bereich von 0,1 bis etwa 50 Gew.-% und darüber hinaus bevorzugt in einer Menge in einem Bereich von 0,25 bis etwa 20 Gew.-%, jeweils bezogen auf das Gewicht des gesamten Verarbeitungshilfsmittels, eingesetzt werden.

Ein erfindungsgemäß hergestelltes Verarbeitungshilfsmittel, das einen oder mehrere der obengenannten Zusatzstoffe enthält; zeigt beim Einsatz zur Verarbeitung von Polymerzusammensetzungeri nicht nur eine, die Verarbeitung

verbessemde Wirkung sondern kann, je nach Art und Menge der Zusatzstoffe, noch weitere Wirkungen aufweisen, die sich über einen langen, nach der Verarbeitung liegenden Zeitraum hin erstrecken. Insbesondere dann, wenn ein nach einem erfindungsgemäßen Verfahren hergestelltes Verarbeitungshilfsmittel eine geeignete Menge an stabilisierend wirkenden Verbindungen aufweist, kann das erfindungsgemäße Verarbeitungshilfsmittel beispielsweise auch als "Stabilisator" bezeichnet werden.

Die obengenannten Zusatzstoffe können im Rahmen des erfindungsgemäßen Verfahrens entweder vor oder während der Polymerisation dem Reaktionsgemisch zugeführt werden oder nach der Polymerisation mit dem Produkt vermischt werden. Die Zugabe der Zusatzstoffe vor oder während der Polymerisation setzt voraus, dass die Zusatzstoffe den Ablauf der Polymerisation nicht oder zumindest nicht in unerwünschter Weise beeinflussen. Wenn die Zusatzstoffe dem Produkt nach der Polymerisation zugegeben werden, so erfolgt diese Zugabe vorzugsweise dann, wenn sich das Produkt noch im schmelzflüssigen Zustand befindet.

Gegenstand der vorliegenden Erfindung ist damit auch ein Verarbeitungshilfsmittel, das sich nach einem im Rahmen des vorliegenden Textes beschriebenen Verfahren erhalten lässt. Vorzugsweise enthält ein erfindungsgemäßes Verarbeitungshilfsmittel ein Polymeres oder ein Gemisch aus zwei oder mehr Polymeren, wie es durch die Polymerisation einer der oben beschriebenen Monomerkomponenten erhältlich ist, eine Lösemittelkomponente wie sie oben beschrieben wurde und gegebenenfalls einen der oben beschriebenen Zusatzstoffe oder ein Gemisch aus zwei oder mehr davon. Die im Rahmen des vorliegenden Textes zur Durchführung des erfindungsgemäßen Verfahrens gemachten Ausführungen, insbesondere die Ausführungen betreffend die im Rahmen des erfindungsgemäßen Verfahrens eingesetzten Inhaltsstoffe sind auf die Zusammensetzung eines erfindungsgemäßen Verarbeitungshilfsmittels sinngemäß voll anzuwenden.

Die im Rahmen des vorliegenden Textes beschriebenen Verarbeitungshilfsmittel, insbesondere auch die im Rahmen des vorliegenden Textes beschriebenen Verarbeitungshilfsmittel die als Zusatzstoffe einen oder mehrere Stabilisatoren enthalten, eignen sich zum Einsatz bei der Verarbeitung von Polymerzusammensetzungen.

Unter dem Begriff "Polymerzusammensetzungen" werden dabei Zusammensetzungen verstanden, die ein Polymeres oder ein Gemisch aus zwei oder mehr Polymeren enthalten, die nicht im Rahmen des erfindungsgemäßen Verfahrens hergestellt wurden. Es ist dabei unerheblich, ob die in einer "Polymerzusammensetzung" enthaltenen Polymeren mit einem oder mehreren der im Rahmen des erfindungsgemäßen Verfahrens hergestellten Polymeren identisch sind. Im Rahmen einer bevorzugten Ausführungsform der vorliegenden Erfindung enthält eine als "Polymerzusammensetzung" bezeichnete Zusammensetzung jedoch mindestens ein Polymeres, das sich in seiner chemischen Zusammensetzung von mindestens einem im Rahmen des vorliegenden Verfahrens hergestellten Polymeren unterscheidet.

Im Rahmen einer bevorzugten Ausführungsform der vorliegenden Erfindung werden die erfindungsgemäßen Verarbeitungshilfsmittel im Rahmen der Verarbeitung von Polymeren eingesetzt, die durch Polymerisation von Monomeren mit mindestens einer olefinisch ungesättigten Doppelbindung erhalten wurden. Derartige Polymere werden im Rahmen des vorliegenden Textes als "Vinylpolymere" bezeichnet.

Gegenstand der vorliegenden Erfindung ist daher auch eine Polymerzusammensetzung, mindestens enthaltend ein Vinylpolymeres und ein gemäß einem erfindungsgemäßen Verfahren hergestelltes Verarbeitungshilfsmittel oder ein erfindungsgemäßes Verarbeitungshilfsmittel.

Im Rahmen einer bevorzugten Ausführungsform der vorliegenden Erfindung enthält eine erfindungsgemäße Polymerzusammensetzung mindestens ein halogeniertes Polymeres. Im Rahmen einer weiteren bevorzugten Ausführungsform der vorliegenden Erfindung enthält eine erfindungsgemäße Polymerzusammensetzung mehr als 50 Gew.-% eines halogenierten Polymeren oder eines Gemischs aus zwei oder mehr halogenierten Polymeren, beispielsweise mehr als 70 oder mehr als 90 Gew.-%, bezogen auf die in der Polymerzusammensetzung enthaltenen Polymeren.

Daher betrifft die vorliegende Erfindung auch eine erfindungsgemäße und im Rahmen des vorliegenden Textes beschriebene Polymerzusammensetzung, die ein halogeniertes Polymeres enthält

Im Rahmen einer besonders bevorzugten Ausführungsform der vorliegenden Erfindung enthält eine erfindungsgemäße Polymerzusammensetzung halogenhaltige Polymere. Beispiele für derartige halogenhaltige Polymere sind Polymere des Vinylchlorids, Vinylharze die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der $\alpha$-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der obengenannten Polymere enthalten.

Im Rahmen einer weiteren bevorzugten Ausführungsform der vorliegenden Erfindung werden die erfindungsgemäßen Verarbeitungshilfsmittel bei der Herstellung von Formteilen aus PVC-U wie Fensterprofilen, technischen Profilen, Rohren und Platten eingesetzt.

Ebenfalls zur Behandlung mit den erfindungsgemäßen Verarbeitungshilfsmitteln geeignet sind die Pfropfpolymerisate von PVC mit EVA, ABS oder MBS. Bevorzugte Substrate für derartige Propfcopolymere sind außerdem die vorstehend genannten Homo- und -Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE; MBAS, PAA (Polyalkylacrylat), PAMA (Polyalkylmethacrylat), EPDM, Polyamiden oder Polylactonen.

Ebenfalls zur Behandlung mit den erfindungsgemäßen Verarbeitungshilfsmitteln geeignet sind Gemische von halogenierten und nicht-halogenierten Polymeren, beispielsweise Gemische der obengenannten nicht-halogenierten Polymeren mit PVC, insbesondere Gemische von Polyurethanen und PVC.

Weiterhin können mit den erfindungsgemäßen Verarbeitungshilfsmitteln auch Rezyklate chlorhaltiger Polymere behandelt werden, wobei grundsätzlich alle Rezyklate der obengenannten, halogenierten Polymeren hierzu geeignet sind. Geeignet ist im Rahmen der vorliegenden Erfindung beispielsweise PVC-Rezyklat.

Im Rahmen einer bevorzugten Ausführungsform der vorliegenden Erfindung enthält eine erfindungsgemäße Polymerzusammensetzung das erfindungsgemäße Verarbeitungshilfsmittel in einer Menge von 0,1 bis 20 phr, insbesondere etwa 0,5 bis etwa 15 phr oder etwa 1 bis etwa 12 phr. Die Einheit phr steht für "per hundred resin" und betrifft damit Gewichtsteile pro 100 Gewichtsteile Polymeres.

Die erfindungsgemäßen Verarbeitungshilfsmittel eignen sich, wie oben bereits angemerkt, in Abhängigkeit von Art und Menge der enthaltenen Zusatzstoffe auch zur Stabilisierung von Polymerzusammensetzungen, insbesondere zur Stabilisierung von Polymerzusammensetzungen die halogenhaltige Polymere enthalten.

Die vorliegende Erfindung betrifft daher auch ein Verfahren zur Stabilisierung halogenhaltiger Polymerer, bei dem ein halogenhaltiges Polymeres oder ein Gemisch aus zwei oder mehr halogenhaltige Polymeren oder ein Gemisch aus einem oder mehreren halogenhaltige Polymeren und einem oder mehreren halogenfreien Polymeren mit einem erfindungsgemäßen Verarbeitungshilfsmittel vermischt wird.

Die Vermischung von Polymeren oder Polymeren und dem erfindungsgemäßen Verarbeitungshilfsmittel kann grundsätzlich zu jedem beliebigen Zeitpunkt vor oder während der Herstellung oder der Verarbeitung des Polymeren erfolgen. So kann das Verarbeitungshilfsmittel beispielsweise dem in Pulverform vorliegenden Polymeren vor der Verarbeitung zugemischt werden. Es ist jedoch ebenso möglich, das Verarbeitungshilfsmittel dem Polymeren oder den Polymeren in erweichtem oder geschmolzenem Zustand zuzusetzen. Darüber hinaus kann das Verarbeitungshilfsmittel bereits während der Polymerisation des Vinylpolymeren oder unmittelbar nach der Polymerisation des Vinylpolymeren zugesetzt werden, beispielsweise während der Polymerisation von PVC oder unmittelbar im Anschluss an die Polymerisation von PVC, beispielsweise zu einem heißen S-PVC-Slurry.

Im Rahmen eines erfindungsgemäßen Verfahrens zur Herstellung einer erfindungsgemäßen Polymerzusammensetzung, wird beispielsweise eine Polymerzusammensetzung mit einem erfindungsgemäßen Verarbeitungshilfsmittel vermischt.

Es ist dabei im Rahmen der vorliegenden Erfindung vorgesehen, dass eine erfindungsgemäße Polymerzusammensetzung ein Vinylpolymeres oder ein Gemisch aus zwei oder mehr Vinylpolymeren, vorzugsweise von halogenierten Vinylpolymeren, ein gemäß einem erfindungsgemäßen Verfahren hergestelltes Gemisch aus Polymeren und Lösemittelkomponente sowie weitere Zusatzstoffe, beispielsweise Zusatzstoffe wie sie im Rahmen des vorliegenden Textes bereits beschrieben wurden, enthält. Dabei ist es im Rahmen der vorliegenden Erfindung sowohl vorgesehen, dass die Zusatzstoffe über das erfindungsgemäße Verarbeitungshilfsmittel in die Polymerzusammensetzung eingebracht wurden als auch dass die Zusatzstoffe in einem oder mehreren separaten Schritten mit der Polymerzusammensetzung und dem Verarbeitungshilfsmittel vermischt wurden. Es ist darüber hinaus möglich, dass beispielsweise ein Teil der gewünschten Zusatzstoffe über das Verarbeitungshilfsmittel in die Polymer Zusammensetzung eingebracht wird und ein weiterer Teil der Zusatzstoffe in einem oder mehreren separaten Schritten mit der Polymerzusammensetzung und dem Verarbeitungshilfsmittel vermischt wird.

Im Rahmen eines erfindungsgemäßen Verfahrens kann der Polymerzusammensetzung zusätzlich zu dem Verarbeitungshilfsmittel noch ein oder mehrere Zusatzstoffe zugesetzt werden.

Vorzugsweise wird dabei das Verarbeitungshilfsmittel der Polymerzusammensetzung in einer Menge von 0,1 bis 20 Gew.-%, bezogen auf das in der Polymerzusammensetzung enthaltene Polymere, zugesetzt.

Besonders bevorzugt wird im Rahmen der vorliegenden Erfindung ein Verfahren bei dem das Vinylpolymere zu mindestens 50 Gew.-% auf Vinylchlorid basiert.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäßen Polymerzusammensetzungen zur Herstellung von Hart- oder Weich-PVC, insbesondere zur Herstellung von PVC-U.

Eine erfindungsgemäße Polymerzusammensetzung kann zu Formkörpern verarbeitet werden. Gegenstand der vorliegenden Erfindung sind daher auch Formkörper, mindestens enthaltend ein erfindungsgemäßes Verarbeitungshilfsmittel oder eine erfindungsgemäße Polymerzusammensetzung.

Der Begriff "Formkörper" umfasst im Rahmen der vorliegenden Erfindung grundsätzlich alle dreidimensionalen Gebilde, die aus einer erfindungsgemäßen Polymerzusammensetzung herstellbar sind. Der Begriff "Formkörper" umfasst im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten., Coextrudate mit recyceltem Kern oder Gehäuse für elektrische Apparaturen oder Maschinen, beispielsweise Computer oder Haushaltsgeräte.

Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Ein weiterer Gegenstand der vorliegenden Erfindung ist die Verwendung eines erfindungsgemäßen Verarbeitungshilfsmittels als Additiv bei der Verarbeitung einer auf Vinylpolymeren basierenden, thermoplastischen Zusammensetzung.

Die Erfindung wird nun anhand von Testmethoden und nicht limitierenden Beispielen näher erläutert.

## TESTMETHODEN

BESTIMMUNG DER PLASTIFIZZIERZEIT

Die Bestimmung erfolge auf einem Brabender-Meßkneter bei einer Temperatur von 170°C. Es wurden 34 g der thermoplastischen Formmasse zur Bestimmung der Plastifizierzeit eingesetzt.

## BEISPIELE

HERSTELLUNG DER ADDITIVE

<u>Beispiel 1:</u>

In einem 1,4 l Stahkeaktor bestückt mit einem Ölbadthermostat, einem Ankerrührer und einem Rückflusskühler werden 150 g Rindertalg, 60 g Polyethylenwachs 45 g oxidiertes Polyethylenwachs (insgesamt eine Mischung aus Baerolub GTS, Baerolub PA und Baerolub PA25) eingewogen. Anschließend wird die Mischung unter Stickstoff bei 100°C geschmolzen und mit dem Ankerrührer bei 100 UpM durchmischt. Zu dieser Lösung wird mittels Dosierpumpe eine Mischung aus 300 g Methylmethacrylat (MMA) und 1,3 g Dibenzoylperoxid zugetropft. Die Durchflussrate der Pumpe wird auf 2,5 ml pro Minute eingestellt. Nach dem Ende der MMA-Zugabe wird noch eine weitere Stunde bei 100°C gerührt. Gegebenenfalls noch vorhandenes Restmonomer wird durch einen Stickstoffstrom aus der Mischung ausgetrieben.

<u>Beispiele 2 bis 5:</u>

Die Durchführung erfolgt analog zu Beispiel 1, wobei die Reaktionstemperaturen zwischen 110°C und 150°C variiert wurden.

<u>Beispiel 6:</u>

Die Durchführung erfolgt analog zu Beispiel 1, wobei die Durchflussrate der Pumpe auf 0,5 ml pro Minuteeingestellt wurde.

<u>Beispiel 7:</u>

Die Durchführung erfolgt analog zu Beispiel 1, wobei als Monomere eine Mischung aus 80 Gewichtsteilen Methylmethacrylat und 20 Gewichtsteilen Acrylsäure-n-butylester eingesetzt wurde.

Beispiel 8:

Die Durchführung erfolgt analog zu Beispiel 1, wobei als Monomere eine Mischung aus 80 Gewichtsteilen Methylmethacrylat und 20 Gewichtsteilen Methacrylsäure-n-butylester eingesetzt wurde.

Beispiel 9:

In einem 1,4 l Stahlreaktor bestückt mit einem Ölbadthermostat, einem Ankerrührer und einem Rückflusskühler werden 150 g Rindertalg, 60 g Polyethylenwachs und 45 g oxidiertes Polyethylenwachs (siehe oben) eingewogen. Anschließend wird die Mischung unter Stickstoff bei 130°C geschmolzen und mit dem Ankerrührer bei 100 UpM durchmischt. Zu dieser Lösung wird mittels Dosierpurnpe eine erste Mischung aus 198 g Methylmethacrylat (MMA) und 1,3 g Dibenzoylperoxid und anschließend eine zweite Mischung aus 42 g MMA, 60 g Acrylsäure-n-butylester und 0,5 g Dibenzoylperoxid zugetropft. Die Durchflussrate der Pumpe wird auf 2,5 ml pro Minute eingestellt. Nach dem Ende der MMA-Zugabe wird noch eine weitere Stunde bei 130°C gerührt. Gegebenenfalls noch vorhandenes Restmonomer wird durch einen Stickstoffstrom aus der Mischung ausgetrieben.

HERSTELLUNG EINER STABILISATORZUSAMMENSETZUNG

Beispiel 11:

Das Produkt aus Beispiel 6 wurde noch in geschmolzenem Zustand im Reaktionsgefäß mit den folgenden weiteren Stabilisatoren versetzt:

| | |
|---|---|
| β-Diketon (Ca-Acetylacetonat) | 60 g |
| BS ASM 104[1] | 60 g |
| Antioxidans[2] | 42 g |
| Hydrotalcit als anorg. Säurefänger | 150 g |
| Zinkstearat | 300 g |
| Organophosphit[3] | 30 g |

[1] = Trihydroxyethylisocyanurat
[2] = Irganox 1076 (Fa. Ciba)
[3] = Rhodiastab 55 P (Fa. Rhodia)

Die erhaltene geschmolzene Stabilisatorzusammensetzung wurde anschließend zum Auskühlen in dünner Schicht ausgebracht und nach dem Abkühlen zu Schuppen gebrochen.

Vergleichsbeispiel 1:

Als Vergleichsversuch wurde eine Schmelze von 150 g Rindertalg, 60 g Polyethylenwachs und 45 g oxidiertem Polyethylenwachs mit den folgenden Produkten versetzt:

| | |
|---|---|
| β-Diketon (Ca-Acetylacetonat) | 60 g |
| BS ASM 104[1] | 60 g |
| Antioxidans[2] | 42 g |
| Hydrotalcit als anorg. Säureiznger | 150 g |
| Zinkstearat | 300 g |
| Organophosphit[3] | 30 g |

Anschließend wurde versucht, in diese Schmelze ein konventionelles Fließhilfsmittel (Baerorapid 10 F, Fa. Baerlocher) einzubringen. Dabei wurde eine gummiartige Masse erhalten, die nicht weiterverarbeitbar war. Der Vergleichsversuch zeigt, dass die Vereinigung von Gleitmitteln, Verarbeitungshilfen und Stabilisatoren in einer einzigen Zusammensetzung nur dadurch möglich ist, dass die Verarbeitungsmittel in dem geschmolzenen Gleitmittel durch Polymerisation hergestellt werden.

Dies lässt sich beispielsweise dadurch erklären, dass die aus dem Stand der Technik bekannten, mittels Emulsionspolymerisation hergestellten Verarbeitungshilfsmittel eine globulare Geometrie mit hydrophiler Oberfläche

(Emulgator) aufweisen. Damit ist eine Einarbeitung in ein Stabilisatorgemisch, unter anderem enthaltend ein Gleitmittel, erschwert. Zur Einarbeitung sind daher hohe Scherkräfte erforderlich. Dies ist beim erfindungsgemäßen Verarbeitungshilfsmittel nicht der Fall.

VERARBEITUNG THERMOPLASTISCHER ZUSAMMENSETZUNG MIT DEN ADDITIVEN

Die verschiedenen Additive wurden in folgender thermoplastischen Zusammensetzung getestet:

| Substanz | Beispiele 1-9 |
|---|---|
| | Teile |
| PVC (K-Wert = 68) | 100 |
| Schlagzähmodifizier[1)] | 7 |
| Titandioxid | 4 |
| Kreide | 3 |
| Ca-Acetylacetonat | 0,2 |
| BS ASM 104 | 0,2 |
| Antioxidans[2)] | 0,14 |
| Hydrotalcit | 0,5 |
| Zinkstearat | 1,0 |
| Organophosphit[3)] | 0,1 |
| Produkt aus Beispiel 1 bis 9 | 1,83 |
| 1) EST 4 Baerorapid, Baerlocher<br>2) Irganox 1040<br>3) Rhodiastab 5 | |

Die verschiedenen Mischungen wurden auf einem Heiz-Kühl-Mischer zu Dryblends verarbeitet und anschließend auf einem Einschneckenextruder zu Bändern extrudiert. Folgende Plastifizierzeiten wurden ermittelt:

| Rezeptur | Plastifizierzeit [min] |
|---|---|
| 1 | 1,9 |
| 2 | 1,9 |
| 3 | 2,0 |
| 4 | 1,9 |
| 5 | 1,9 |
| 6 | 2,1 |
| 7 | 1,7 |
| 8 | 1,8 |
| 9 | 1,8 |

**Patentansprüche**

1. Verfahren zur Herstellung eines Verarbeitungshilfsmittels für Vinylpolymere, das ohne vorherige Trocknungsschritte eingesetzt werden kann, bei dem ein Reaktionsgemisch, mindestens enthaltend ein (Meth)acrylatmonomeres mit 1 bis 3 C-Atomen im Alkoholrest oder ein Monomerengemisch, mindestens enthaltend ein (Meth)acrylatmonomeres mit 1 bis 3 C-Atomen im Alkoholrest, und ein schmelzbares Additiv oder ein Gemisch aus zwei oder mehr schmelzbaren Additiven für Vinylpolymere, wobei das schmelzbare Additiv oder das Gemisch aus zwei oder mehr schmelzbaren Additiven unter Polymerisationsbedingungen mindestens in erweichtem Zustand vorliegt und als Lösemittel im Rahmen der Polymerisation des (Meth)acrylatmonomeren oder des Monomerengemisches dient, bei einer Temperatur oberhalb der Erweichungstemperatur des schmelzbaren Additivs oder des Gemischs aus zwei oder mehr schmelzbaren Additiven radikalisch zu einem Reaktionsprodukt polymerisiert wird.

**2.** Verfahren nach Anspruch 1, **dadurch gekennzeichnet, dass** die Polymerisation bei einer Temperatur von mindestens 80 °C durchgeführt wird.

**3.** Verfahren nach Anspruch 1 oder 2, **dadurch gekennzeichnet, dass** das Reaktionsgemisch mindestens ein Triglycerid enthält.

**4.** Verfahren nach einem der Ansprüche 1 bis 3, **dadurch gekennzeichnet, dass** die Zugabe des Monomeren oder des Monomerengemischs aus zwei oder mehr Monomeren sukzessiv in einem Volumenverhältnis von 1:500 bis 1: 50, bezogen auf das Volumen des schmelzbaren Additivs oder des Gemischs aus zwei oder mehr schmelzbaren Additiven, pro Minute während der Reaktionsdauer erfolgt.

**5.** Verfahren nach einem der Ansprüche 1 bis 4, **dadurch gekennzeichnet, dass** das Monomerengemisch mindestens 50 Gew.-% Methyl(meth)acrylat enthält.

**6.** Verfahren nach einem der Ansprüche 1 bis 5, **dadurch gekennzeichnet, dass** das Reaktionsgemisch ein Triglyzerid und mindestens einen weiteren Weichmacher für Vinylpolymere enthält.

**7.** Verfahren nach einem der Ansprüche 1 bis 6, **dadurch gekennzeichnet, dass** dem Reaktionsgemisch vor oder während der Polymerisation oder dem Reaktionsprodukt ein Stabilisator für Vinylpolymere zugesetzt wird.

**8.** Verfahren nach einem der Ansprüche 1 bis 7, **dadurch gekennzeichnet, dass** das schmelzbare Additiv oder das Gemisch aus zwei oder mehr schmelzbaren Additiven unter Polymerisationsbedingungen in flüssigem Zustand vorliegt.

**9.** Verfahren nach einem der Ansprüche 1 bis 8, **dadurch gekennzeichnet, dass** das schmelzbare Additiv oder das Gemisch aus zwei oder mehr schmelzbaren Additiven einen Schmelzpunkt von mindestens 30 °C aufweist.

**10.** Verarbeitungshilfsmittel, erhältlich nach einem der Ansprüche 1 bis 9.

**11.** Polymerzusammensetzung, mindestens enthaltend ein Vinylpolymeres und ein gemäß einem der Ansprüche 1 bis 9 hergestelltes Verarbeitungshilfsmittel oder ein Verarbeitungshilfsmittel gemäß Anspruch 10.

**12.** Polymerzusammensetzung nach Anspruch 11, **dadurch gekennzeichnet, dass** sie ein halogeniertes Polymeres enthält.

**13.** Verfahren zur Herstellung einer Polymerzusammensetzung, bei dem eine ein Vinylpolymeres oder ein Gemisch aus zwei oder mehr Vinylpolymeren enthaltende, thermoplastische Zusammensetzung mit einem gemäß einem der Ansprüche 1 bis 9 hergestellten Verarbeitungshilfsmittel oder einem Verarbeitungshilfsmittel gemäß Anspruch 10 versetzt wird.

**14.** Verfahren nach Anspruch 13, wobei der Polymerzusammensetzung zusätzlich zu dem Verarbeitungshilfsmittel noch ein oder mehrere Zusatzstoffe zugesetzt werden.

**15.** Verfahren nach Anspruch 13 oder 14, **dadurch gekennzeichnet, dass** das Verarbeitungshilfsmittel der Polymerzusammensetzung in einer Menge von 0,1 bis 20 Gew.-%, bezogen auf das in der Polymerzusammensetzung enthaltene Polymere, zugesetzt wird.

**16.** Verfahren nach einem der Ansprüche 13 bis 15, **dadurch gekennzeichnet, dass** das Vinylpolymere zu mindestens 50 Gew.-% auf Vinylchlorid basiert.

**17.** Verwendung eines Verarbeitungshilfsmittels, erhältlich gemäß einem der Ansprüche 1 bis 9 oder eines Verarbeitungshilfsmittels gemäß Anspruch 10, als Additiv bei der Verarbeitung einer auf Vinylpolymeren basierenden, thermoplastischen Zusammensetzung.

## Claims

1. Process for the preparation of a processing aid for vinyl polymers, which can be used without prior drying steps, in which a reaction mixture, at least comprising a (meth)-acrylate monomer having from 1 to 3 carbon atoms in the alcohol radical or a monomer mixture, at least comprising a (meth)acrylate monomer having from 1 to 3 carbon atoms in the alcohol radical, and a meltable additive or a mixture of two or more meltable additives for vinyl polymers, whereas the meltable additive or the mixture of two or more meltable additives being present at least in a softened state under polymerization conditions and serving as solvent in the polymerization of the (meth)acrylate monomer or the monomer mixture, is radical-polymerized to form a reaction product at a temperature above the softening temperature of the meltable additive or the mixture of two or more meltable additives.

2. Process according to claim 1, **characterized in that** the polymerization is carried out at a temperature of at least 80°C.

3. Process according to claim 1 or 2, **characterized in that** the reaction mixture comprises at least one triglyceride.

4. Process according to any one of claims 1 to 3, **characterized in that** the addition of the monomer or the monomer mixture of two or more monomers is effected successively in a ratio by volume of from 1:500 to 1:50, based on the volume of the meltable additive or the mixture of two or more meltable additives, per minute during the reaction period.

5. Process according to any one of claims 1 to 4, **characterized in that** the monomer mixture contains at least 50 % by weight methyl (meth)acrylate.

6. Process according to any one of claims 1 to 5, **characterized in that** the reaction mixture comprises a triglyceride and at least one further plasticizer for vinyl polymers.

7. Process according to any one of claims 1 to 6, **characterized in that** a stabilizer for vinyl polymers is added to the reaction mixture before or during polymerization or to the reaction product.

8. Process according to any one of claims 1 to 7, **characterized in that** the meltable additive or the mixture of two or more meltable additives is in a liquid state under polymerization conditions.

9. Process according to any one of claims 1 to 8, **characterized in that** the meltable additive or the mixture of two or more meltable additives has a melting point of at least 30°C.

10. Processing aid, obtainable according to any one of claims 1 to 9.

11. Polymer composition, at least comprising a vinyl polymer and a processing aid prepared according to any one of claims 1 to 9 or a processing aid according to claim 10.

12. Polymer composition according to claim 11, **characterized in that** it comprises a halogenated polymer.

13. Process for the preparation of a polymer composition, in which a processing aid prepared according to any one of claims 1 to 9 or a processing aid according to claim 10 is added to a thermoplastic composition comprising a vinyl polymer or a mixture of two or more vinyl polymers.

14. Process according to claim 13, wherein one or more additional ingredients are added to the polymer composition in addition to the processing aid.

15. Process according to claim 13 or 14, **characterized in that** the processing aid is added to the polymer composition in an amount of from 0.1 to 20 % by weight, based on the polymer contained in the polymer composition.

16. Process according to any one of claims 13 to 15, **characterized in that** at least 50 % by weight of the vinyl polymer is based on vinyl-chloride.

17. Use of a processing aid, obtainable according to any one of claims 1 to 9 or a processing aid according to claim 10,

as an additive in the processing of a thermoplastic composition based on vinyl polymers.

## Revendications

1. Méthode de préparation d'un produit auxiliaire de traitement pour des polymères vinyliques, lequel peut être employé sans étapes de séchage, dans laquelle un mélange de réaction contenant au moins un monomère de (méth)acrylate avec 1 à 3 atomes de carbone dans le substituant alcoolique ou un mélange de monomères contenant au moins un monomère de (méth)acrylate avec 1 à 3 atomes de carbone dans le substituant alcoolique, et un additif fusible ou un mélange de deux ou plus d'additifs fusibles pour des polymères vinyliques, dans quel cas l'additif fusible ou le mélange de deux ou plus d'additifs fusibles étant présent au moins dans un état ramolli sous des conditions de polymérisation et servant comme solvant dans le cadre de la polymérisation du monomère de (méth)acrylate ou des mélanges de monomères, étant polymérisé à un produit de réaction de façon radicalaire à une température au-dessus de la température de ramollissement des additifs fusibles ou des mélanges de deux ou plus d'additifs fusibles.

2. Méthode selon la revendication 1, **caractérisée en ce que** la polymérisation a lieu à une température de au moins 80°C.

3. Méthode selon la revendication 1 ou 2, **caractérisée en ce que** le mélange de réaction contient au moins un triglycéride.

4. Méthode selon l'une des revendications 1 à 3, **caractérisée en ce que** l'addition des monomères ou des mélanges de monomères de deux ou plus de monomères a lieu successivement dans un rapport de volume de 1:500 bis 1: 50, en référence au volume de l'additif fusible ou des mélanges de deux ou de plus d'additifs fusibles, par minute pendant la durée de réaction.

5. Méthode selon l'une des revendications 1 à 4, **caractérisée en ce que** le mélange de monomères contient au moins 50 % en poids de méthyl(méth)acrylate.

6. Méthode selon l'une des revendications 1 à 5, **caractérisée en ce que** le mélange de réaction contient un triglycéride et au moins un autre plastifiant pour des polymères vinyliques.

7. Méthode selon l'une des revendications 1 à 6, **caractérisée en ce qu'**un stabilisant pour des polymères vinyliques est ajouté au mélange de réaction avant ou pendant la polymérisation ou au produit de réaction.

8. Méthode selon l'une des revendications 1 à 7, **caractérisée en ce que** l'additif fusible ou le mélange de deux ou plus d'additifs fusibles est présent dans un état liquide sous des conditions de polymérisation.

9. Méthode selon l'une des revendications 1 à 8, **caractérisée en ce que** l'additif fusible ou le mélange de deux ou de plus d'additifs fusibles a un point de fusion d'au moins 30 °C.

10. Produit auxiliaire de traitement, disponible selon l'une des revendications 1 à 9.

11. Composition de polymères au moins contenant un polymère vinylique et un Produit auxiliaire de traitement préparé selon l'une des revendications 1 à 9 ou un produit auxiliaire de traitement selon la revendication 10.

12. Composition de polymères selon la revendication 11, **caractérisée en ce qu'**elle contient un polymère halogéné.

13. Méthode de préparation d'une composition de polymères, dans laquelle un produit auxiliaire de traitement préparé selon l'une des revendications ou un produit auxiliaire de traitement selon la revendication 10 est ajouté à une composition thermoplastique contenant un polymère vinylique ou un mélange de deux ou plus de polymères vinyliques.

14. Méthode selon la revendication 13, dans quel cas, outre le produit auxiliaire de traitement, un ou plusieurs additifs sont ajoutés à la composition de polymères.

15. Méthode selon la revendication 13 ou 14, **caractérisée en ce que** le produit auxiliaire de traitement de la composition

de polymères est ajouté dans une quantité de 0,1 à 20 % en poids, relative au polymère contenant dans la composition de polymères.

**16.** Méthode selon l'une des revendications 13 à 15, **caractérisée en ce que** le polymère vinylique est basé à au moins 50 % en poids sur le chlorure de vinyle.

**17.** Usage d'un produit auxiliaire de traitement, disponible selon l'une des revendications 1 à 9 ou d'un produit auxiliaire de traitement selon la revendication 10, comme additif quant au traitement d'une composition thermoplastique à base de polymères vinyliques.